# EUROPEAN PATENT SPECIFICATION

(11) **EP 1 246 059 B1**
(45) Date of publication and mention of the grant of the patent: **30.08.2006**
(21) Application number: 01106497.9
(22) Date of filing: 26.03.2001
(51) Int. Cl.: G06F 9/46

(54) **Dynamic interface aggregation on demand**
Anforderungsbedingte dynamische Schnittstellengenerierung
Composition dynamique d'interface sur demande

(43) Date of publication of application: 02.10.2002
(73) Proprietor: SUN MICROSYSTEMS, INC., Palo Alto, California 94303 (US)
(72) Inventor: Hönnig, Michael, 22143 Hamburg (DE); Meyer, Markus, 21423 Winsen (DE)
(74) Representative: HOFFMANN EITLE

(56) References cited:
- EP-A- 0 822 490
- WO-A-00/77632
- US-A- 6 085 030
- TREVOR J ET AL: "The use of adapters to support cooperative sharing" TRANSCENDING BOUNDARIES, CSCW 94. PROCEEDINGS OF THE CONFERENCE ON COMPUTER SUPPORTED COOPERATIVE WORK, WORKSHOPS OF THE CONFERENCE ON COMPUTER SUPPORTED COLLABORATIVE WORK, CHAPEL HILL, NC, USA, 22-23 OCT. 1994, pages 219-230, XP002174728 1994, New York, NY, USA, ACM, USA ISBN: 0-89791-689-1
- KONSTANTAS D: "Object oriented interoperability" ECOOP '93 - OBJECT-ORIENTED PROGRAMMING. 7TH EUROPEAN CONFERENCE PROCEEDINGS, PROCEEDINGS OF THE SEVENTH EUROPEAN CONFERENCE ON OBJECT-ORIENTED PROGRAMMING. ECOOP '93, KAISERSLAUTERN, GERMANY, [Online] 26 - 29 July 1993, XP002174729 Retrieved from the Internet: <URL:http://cui.unige.ch/OSG/publications/ OO-articles/Dimitri/objectOrientedInterop. ps.Z> [retrieved on 2001-08-10]

## Description

### Field of the Invention

The invention relates to a method of dynamic interface generation at an adapter manager and a service object, and further relates to a corresponding adapter manager and service object.

### Background of the Invention

Computers are valuable assistants in an ever growing number of fields. While in the past computers were predominantly used for highly specialized applications, such as to support scientific work in research institutions, and thus were not highly proliferated, today virtually everybody uses computers for the widest range of applications. Applications include for example personal data services, office applications, e-mail, home banking applications, home shopping applications and similar.

Further, while in the early days application programs were usually executed on a single computer, today large networks of computers are often used for executing distributed applications, for example in client and server scenarios.

Still further, while such application programs can be written as a single program, i.e. one piece of code, with the applications becoming ever more complex, writing a single program becomes very difficult and in many cases becomes most uneconomical, as often a number of different application programs or parts of application programs use similar functionality. Thus, computer programs are nowadays generally written in modules, which communicate with one another and exchange data in providing service to a user.

Structuring application programs into modules is facilitated by modern computer languages such as the C++ language, or any other object-oriented programming language, and by interface standards like CORBA or DECOM.

Object-oriented programming supports object technology, i.e., to structure an application program into individual objects, each object realizing a certain functionality of the application program. For example, in a simple application program, an object could realize the functionality of a cursor on a screen, and this object could interact with further objects, for example objects providing functionality for drawing shapes and similar.

In order to enable the objects, forming part of an application program or a plurality of application programs, to communicate with one another, i.e., to exchange data, interfaces between the individual objects must be available, the interfaces defining the nature and format of data to be transmitted from one object to another object. Generally, an object provides a plurality of such interfaces for communication with other objects, and an object wishing to obtain service from another object will request a required interface from the object to be accessed, in order to allow the required data transfer, e.g., from the requesting object to the accessed object. Upon the request, the accessed object will then provide the required interface.

In the prior art, the interfaces provided by an object form an integral part of the object and are generally designed when originally writing the code of the object. Thus, any capability of the object to communicate with the outside world, i.e. with other objects, is defined through the interfaces designed when writing the corresponding object.

Forming interfaces as an integral part of objects, however, means that in complex applications with a potentially very large number of interfaces, a large program overhead is generated, possibly replicating specific interfaces with different objects. Further, even if forming interfaces as an integral part of objects of an application program may work well in a static environment, where access schemes between individual objects do not change, this may not work any longer in a dynamic environment. For example, in a scenario where a plurality of application programs access a set of common objects, and where some of the objects are updated into a newer version and now require modified interfaces from the accessing applications, different versions of the commonly accessing applications have to be provided, each of the them providing the required interfaces to the updated objects and the objects not being updated. Likewise, where one of the application programs is updated into a newer version and now requires modified interfaces from the commonly accessed objects, different versions of the commonly accessed objects have to be provided, each of the sets providing the required interfaces to the updated application programs and the application programs not being updated.

Similar may happen, if within a single application program a subgroup of the objects making up the application program are updated, leading to the requirement of different interfaces at accessed objects. This also leads to the requirement to provide different interface versions of objects, leading to high coding expenses and a large program overhead. Moreover, such problems arise when combining APIs (application program interfaces) such as Bonobo and OpenOffice.org, e.g. to access common objects.

Of course, instead of providing different versions of objects, the objects could be rewritten to satisfy all interface needs, however, this leads to the same disadvantages.

Thus, all of the above examples share the disadvantage of either creating large numbers of derivations of object implementations or of creating a single or few implementations with a very large number of interfaces for all purposes.

US 6 085 030 A describes a component server architecture enabling nodes of a computer network to interact with heterogeneous software components and services, which are distributed throughout the network. Distributed interaction is achieved by registering and locating the components and services using an object-neutral global component registry.

A component management service transparently ensures a proper administration, authentication and run-time binding access to components offered in response to requests from applicants executing on the nodes. The component registry interoperates with the component management service to determine how to bind a requesting application with an appropriate component.

The component registry preferably includes an interface adapter repository which is used to organize the objects. The interface adapter sends a request to the interface adapter repository to built an appropriate interface between the offered component and the object model of the requesting application. As a result an offer is returned to the requesting application that resembles a native component.

### Summary of the Invention

It is therefore an object of the invention to provide an environment where interfaces between different objects may be provided in a distributed environment on demand, e.g. during runtime, at reduced complexity.

According to an embodiment, a method of dynamic interface generation at an adapter manager includes receiving from a service object an adapter request at least including information on at least one offer-interface offered by the service object, and a request-interface demanded by a user object, the user object requiring a functionality provided by the service; obtaining an interface adapter from the request-interface to at least one of the at least one offer-interfaces offered by the service object; and transmitting at least information on the interface adapter to the service object, including e.g. the adapter itself or an address or pointer indicating a storage location of the interface adapter, for enabling the user object to access the service object.

Thus, interface adapters, providing the required functionality to allow different objects to access one another, may be obtained through the adapter manager on demand, e.g. during runtime. The adapter can be transmitted to a service object, in order to provide the service object with the required interface functionality to be accessed by the user object. Since the adapter request includes the necessary information on the request-interface and the interfaces offered by the service object, the adapter manager may obtain an appropriate interface adapter, which for example may be previously coded and stored at a location accessible by the adapter manager.

The interface adapter may further be selected from a library of interface adapters available at the adapter manager. Thus, the adapter manager may be able to access a potentially large number of interface adapters stored in a library, for example in a database.

An interface adapter may be selected by the adapter manager based on a list of offered interfaces, including at least one offered interface and a list of needed interfaces, including at least one needed interface. Thus, since the interface adapters available for selection by the adapter manager are defined by their offered and needed interfaces, the selection operation can easily be performed, as the adapter manager knows about the request-interface, requested by the user object, and the at least one offered interface available at the service object. The adapter manager must only find an interface adapter with an offered interface matching the request-interface, requested by the user object, and with needed interface(s) matched, e.g. covered by, the offer-interface(s) at the service object.

If more than one suitable interface adapter is available, an interface adapter may be selected based on a classifier stored in connection with the adapters. The classifier may correspond to a quality of the interface adapter, such as computational requirements and similar, and the optimum interface adapter may be selected based on the classifier.

Further, if an adapter is not available, the adapter manager may aggregate interface adapters to generate a composite adapter based on the interface adapters. The adapter manager may thus satisfy the need for a request-interface based on offer-interfaces at the service object by combining more than one interface adapter to form a composite adapter.

The composite adapter may include a first interface adapter connecting the request-interface to at least one intermediate interface and a second interface adapter connecting the at least one intermediate interface to the at least one offer-interface, i.e. the interfaces available at the service object. Accordingly, adapters may be concatenated in a series connection to form a composite adapter from the request-interface to the at least one offered interface. Thus, instead of maintaining a large number of "full" interface adapters, a smaller number of "partial" interface adapters may be maintained which may then be connected as appropriate to form the interface adapter from the request-interface to the at least one offered interface.

Further, the composite adapter may include a third interface adapter connecting a first part of the request-interface to the at least one offer-interface, and a fourth interface adapter connecting a second part of the request-interface to the at least one offer-interface. Accordingly, the adapters may also be combined in a parallel connection, and as before, a number of required interface adapters may be reduced, since interface adapters may be generated by parallel connections of interface adapters to form composite adapters from the request-interface to the at least one offer-interface.

Any composite adapter generated by the adapter manager may be included into the library of adapters, in order to avoid a repeated aggregation of the composite adapter upon further adapter requests from service objects.

A classifier may be stored in association with the composite adapter in the library, the classifier indicating that the composite adapter is a composite adapter and it may be provided for selecting a composite adapter from the library of adapters only if a corresponding interface adapter, not being a composite adapter, does not exist. As composite adapters may be computationally more expensive than regular interface adapters, such a composite adapter is only selected if a corresponding generic interface adapter is not available.

The adapter request may further include information on an access interface at the service object, allowing the adapter manager to access the service object to determine offer-interfaces available at the service object. Thus, the adapter request may only include indirect information on the offer-interfaces.

The adapter request from the service object may also include information on data or types of data available at the service object, enabling the adapter manager to select an indirect interface adapter, the indirect interface adapter allowing the user object to access the data at the service object through at least one interface available at the service object not initially designed for such access.

During the above operations, the service object may determine whether at least a part of the request-interface can be directly served by at least one interface available at the service object. In this case the user object may directly access the service object based on the part of the offer-interface. The service object may then generate an adapter request based on the remaining part of the request-interface.

With this technique the interfaces already existing at the service object may be directly used, thus reducing computational complexity.

The service object may also include a link to a legacy object, the legacy object being an object not arranged to generate an adapter request for an interface adapter, i.e. for an unavailable interface. As the service objects may include links to the legacy objects, when for example updating objects, old objects, i.e. legacy objects, which do not have the functionality to generate adapter requests, may still be supported, reducing the requirement for rewriting code.

The service objects for linking to legacy objects may be provided by a wrapper object factory and the legacy object may be provided by a legacy object factory. Thus, the service object with the link to the legacy object may be automatically generated by the wrapper object factory and, similarly, a required legacy object may be provided by the legacy object factory.

According to a further embodiment, a method of dynamic interface generation executed at a service object includes receiving, at the service object from a user object, a user request for a request-interface, the user object requiring a functionality provided by the service; generating an adapter request for transmission to an adapter manager, the adapter request at least including information on offer-interfaces, offered by the service object, and the request-interface; transmitting the adapter request to the adapter manager to instruct the adapter manager to obtain an interface adapter from the request-interface to at least one of the offer-interfaces at the service object; and receiving at least information on the interface adapter and enabling an access from the user object based on the interface adapter.

With the above outlined operations the service object may advantageously be provided with an interface adapter, eliminating the need for changing existing code, if changed interface requirements emerge, e.g. due to updating operations of subgroups of objects of an application program or a plurality of application programs.

The service object may advantageously transmit an address of the interface adapter to the user object for enabling the user object to access the service object. Thus, it is not necessary to transmit the entire interface, it is only required to transmit an identifier enabling the corresponding object to access the interface.

Further, a program may include instructions adapted to carry out one or a plurality of the above operations. A computer readable medium may be provided, in which a program is embodied, where the program is to make a computer execute one or a plurality of the above operations. A computer program product may comprise the computer readable medium.

According to another example an adapter manager may be provided for dynamic interface generation, including an adapter manager receiving module for receiving from a service object an adapter request at least including information on at least one offer-interface offered by the service object, and a request-interface demanded by a user object, the user object requiring a functionality provided by the service; an adapter manager determining module for obtaining an interface adapter from the request-interface to at least one of the at least one offer-interfaces offered by the service object; and adapter manager transmission module for transmitting at least information on the interface adapter to the service object for enabling the user object to access the service object.

According to a further embodiment, a service object for dynamic interface generation includes a service object receiving module for receiving from a user object a user request for a request-interface, the user object requiring a functionality provided by the service; a request generating module for generating an adapter request for transmission to an adapter manager, the adapter request at least including information on offer-interfaces, offered by the service object, and the request-interface; a service object transmission module for transmitting the adapter request to the adapter manager to instruct the adapter manager to obtain an interface adapter from the request-interface to at least one of the offer-interfaces at the service object; and wherein the service object receiving module is arranged to receive at least information on the interface adapter for enabling an access from the user object based on the interface adapter.

Further, advantageous features of the invention are disclosed in further dependent claims.

### Brief Description of the Drawings

- Fig. 1: shows a system for dynamic interface generation according to the invention;
- Fig. 2: shows a combination of a user object, an interface adapter and a service object illustrating the application of interface adapters according to an embodiment of the invention;
- Fig. 3: illustrates operations at a user object, a service object and an adapter manager according to another embodiment of the invention;
- Fig. 4: illustrates a user object, a service object and various elements for establishing communication according to another embodiment of the invention;
- Fig. 5: shows examples of interface adapters according to another embodiment of the invention;
- Fig. 6: shows operations executed at the adapter manager according to another embodiment of the invention;
- Fig. 7: shows operations at an adapter manager according to another embodiment of the invention;
- Fig. 8: illustrates operations at a service object according to another embodiment of the invention;
- Fig. 9: illustrates a user object and a service object, the service object wrapping a legacy object according to another embodiment of the invention;
- Fig. 10: illustrates a time sequence of messages between a user object, a service object and an adapter manager according to another embodiment of the invention;
- Fig. 11: illustrates a time sequence of operations at a user object, a service object, an adapter manager and an adapter library according to another embodiment of the invention; and
- Fig. 12: illustrates a time sequence of operations executed at a user object, a service object, a legacy object and an adapter manager according to another embodiment of the invention.

### Detailed Description of the Preferred Embodiments

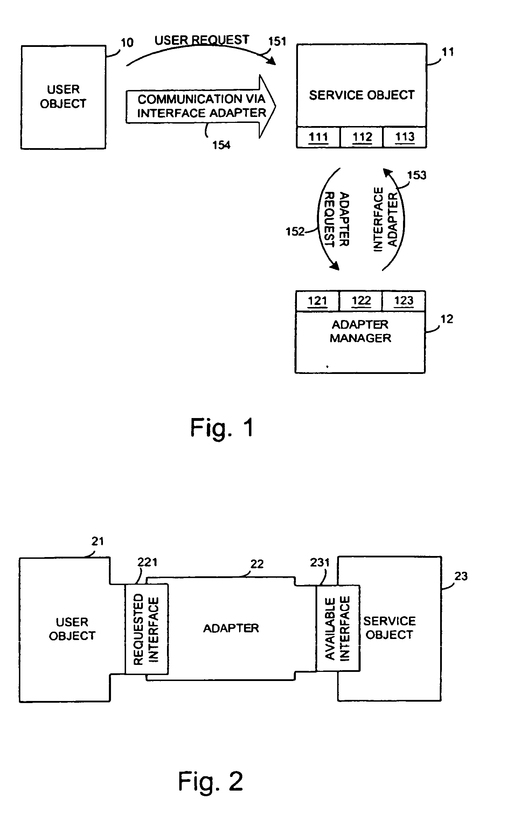

In the following an embodiment of the invention will be described with respect to Fig. 1.

Fig. 1 shows a system for dynamic interface generation according to an embodiment of the invention, allowing a user object to access a service object through an interface adapter provided by an adapter manager.

The system shown in Fig. 1 includes a user object, denoted by reference numeral 10, a service object 11, and an adapter manager 12.

The service object 11 includes a service object receiving module 111 for receiving from the user object 10 a user request regarding a request-interface. The user request transmitted from the user object to the service object is illustrated by an arrow 151. Further, the service object 11 includes a request generating module 112 for generating an adapter request for transmission to the adapter manager 12, the adapter request at least including information on offer-interfaces at the service object 11, and on the request-interface. The adapter request may also include information on an access interface at the service object, allowing the adapter manager to access the service object to determine offer-interfaces available at the service object, i.e. in order to determine whether a particular interface adapter fits to an offer-interface offered by the service object. Thus, the adapter request can include indirect information on the interfaces available at the service object.

In this context, a module may be any means to realize the respective functionality, including software, hardware and combinations thereof.

The adapter request transmitted from the service object 11 to the adapter manager 12 is illustrated by an arrow 152. Still further, the service object 11 includes a service object transmission module 113 for transmitting the adapter request to the adapter manager to instruct the adapter manager to obtain an interface adapter from the request-interface to at least one of the offer-interfaces at the service object. The service object receiving module 111 is further arranged to receive the interface adapter from the adapter manager 12 for enabling access by the user object based on the received interface adapter. The interface adapter transmitted from the adapter manager 12 to the service object 11 is illustrated by an arrow 153. The communication enabled between the user object 10 and the service object 11 via the interface adapter is illustrated by an arrow 154. Even though the arrow 154 extends from the user object 10 to the service object 11, a bidirectional communication is possible.

The adapter manager 12 includes an adapter manager receiving module 121 for receiving from the service object 11 the adapter request 152, the adapter request at least including the information on at least one of an interface available at the service object 11 and a request-interface requested by the user object 10. Further, the adapter manager includes an adapter manager determining module 122 for obtaining an interface adapter from the request-interface to at least one of the at least one offer-interface at the service object 11. Obtaining the interface adapter may include at least one of selecting, identifying, retrieving the interface adapter, and similar.

An adapter manager transmission module 123 is provided at the adapter manager 12 for transmitting at least information on the interface adapter to the service object 11 for enabling the user object 10 to access the service object 11, as indicated by arrow 154. This may include a transmission of the interface adapter itself, e.g. a code section forming the interface adapter, but may also include transmitting an address or pointer indicating a storage location of the interface adapter. After receiving the information on the interface adapter from the adapter manager, the service object may notify the user object with a message also including information on the received interface adapter, for example comprising, as above, the interface adapter itself, or an address or pointer indicating a storage location of the interface adapter.

Preferably, interface adapters which may be needed are previously written and stored to be selected by the adapter manager 12, upon receiving an adapter request from the service object. In this case the adapter manager determining module can be arranged to obtain the interface adapter from a library (not shown) of interface adapters accessible by the adapter manager.

The library may be a data base storing code sections of interface adapters, or may be a list of identifiers of interface adapters stored somewhere else, including e.g. addresses of interface adapters or pointers indicating storage locations of a respective interface adapter.

In the above described system, a user object 10 attempting to access the service object 11 can thus be provided with the necessary interface adapter allowing the user object to actually access the service object. Since the interface adapter can be delivered by the adapter manager 12 on demand in a runtime environment, it is not any longer necessary that the service object 11 provides all possible interfaces for all possible user objects accessing the service object. Thus, complicated rewriting code of service objects when updating parts of the system, particularly user objects, can be eliminated.

In the following, examples of the elements of the system shown in Fig. 1 are described in further detail. It is noted that modifications of the following examples are still within the scope of the invention.

The system for dynamic interface generation shown in Fig. 1 may be realized using one or a plurality of data processing devices, such as general purpose data processing devices, server data processing devices or client data processing devices, including dedicated hardware and similar. The individual elements, i.e. the user object 10, the service object 11 and the adapter manager 12 may reside on a single data processing device or may be distributed onto a plurality of data processing devices.

In the following, the elements of the service object will be outlined in further detail.

The service object 11 preferably is an object of an application program for providing a particular functionality during execution of an application program. The application program may be run by a user controlling a data processing device. An application program may for example be a personal data organizer, a text processor, an office application such as spread sheet applications, e-mail applications, or distributed applications such as home banking applications and distributed applications providing services in a client and server scenario.

The service object may in general provide any functionality within an application program, or may be an object providing functionality for a plurality of application programs sharing the object. For example, a plurality of application programs could be arranged to access a library of service objects providing standard functionality such as data input/output, visualization tools and similar.

The service object may be implemented as a software program or may be realized as a dedicated hardware device. Further, the service object receiving module 111, the request generating module 112 and the service object transmission module 113 may form an integral part of the service object, providing the service object with the required data input/output and communication functionality.

However, it is also possible that the service object receiving module 111, the request generating module 112 and the service object transmission module 113 are realized on dedicated devices, including realized as hardware, and may reside on different physical entities in communication with the service object.

The service object preferably includes one or a plurality of interfaces for communicating to other entities of the system, such as further objects, e.g. the user object 10. The interfaces (not shown) may be realized in software, forming an integral part of the service object 11, or may be realized as dedicated devices, including hardware, and may reside on the same physical entity as the service object or may reside on different physical entities.

Usually, interfaces are generated together with the object software program or object hardware and thus are closely linked to the object itself.

Hardware interfaces are the plugs, sockets, wires and the electrical pulses traveling through them in a particular pattern. Also included are electrical timing considerations. Examples are RS-232 transmission, the Ethernet and Token Ring network topologies and the IDE, ESDI, SCSI, ISA, EISA and Micro Channel interfaces.

Software, or programming, interfaces are the languages, codes and messages programs use to communicate with each other and to the hardware. Examples are the applications that run under an operating system as well as the SMTP e-mail and LU 6.2 communications protocols.

The interfaces of the service object allow other objects such as the user object 10 to access the service object 11 in accordance with predetermined rules specified by the interfaces offered by the service object. Thus, another object such as the user object 10 can only communicate with the service object 11, if the service object provides all required interfaces to the object wishing to access the service object. In a static situation all needed interfaces for access by other objects may be included into the service object, and thus all possible access scenarios may be accommodated, or the user object is directly adapted to the service object.

However, if requirements change, particularly if for example further objects are added to the system and wishing to obtain services from the service object 11, the interfaces available at the service object may not fit the need of a user object, such as user object 10. In the prior art, in this case a servicing object is not any longer able to serve an access request from another object and it becomes necessary to rewrite the software making up the servicing object or to change existing hardware arrangements making up the servicing object.

However, according to the invention, if a situation as the above occurs, i.e., that the service object 11 is not able to provide an interface requested by an user object, such as user object 10, the service object 11 generates an adapter request, as indicated by arrow 152, and transmits same to the adapter manager 12. The adapter request includes information on interfaces available at the service object, i.e., direct information on the interfaces initially provided with the service object, or indirect information on the interfaces available at the service object, e.g. allowing the adapter manager to interrogate the service object, whether a particular interface is available. For example, the adapter manager could sequentially go through a list of interface adapters and could, for each one of them, interrogate the service object, whether a offer interface is available, the offer interface at least fitting partially to the interface adapter.

Further, the adapter request includes information on a request-interface, requested with the user request 151, received from the user object 10. This information may be directly included in the adapter request, or indirectly by naming a source, where information on the request-interface may be retrieved from, e.g. the user object.

In response thereto, the adapter manager provides an interface adapter and transmits same to the service object 11. The interface adapter may either be transmitted physically, or an address specifying the interface adapter may preferably be transmitted from the adapter manager to the service object, enabling the service object to access the interface adapter. The interface adapter provides an adapter from the request-interface, requested by the user object and at least one of the interfaces available at the service object. Upon receiving the interface adapter or information on the interface adapter, the service object may notify the user object, e.g. transmit an address specifying the interface adapter to the user object for enabling the user object to access the service object 11 via the adapter interface, as illustrated by arrow 154.

Alternatively, it is also possible that the adapter manager directly transmits information on the interface adapter to the user object, e.g. in parallel to a transmission of information on the interface adapter to the service object 11.

It is also possible that the user object generates the adapter request and uses an adapter received from the adapter manager to access the service object.

In the following, the elements of the user object will be outlined further detail.

The user object 10 may generally be constructed similar to the service object, i.e., may be an object of an application program for providing a certain functionality, or may be an object, e.g. in a library of objects, providing functionality for a plurality of application programs. The user object may be part of the same application program as the service object 11 or may be part of another application program. It is also possible that the user object is implemented in hardware, as outlined before.

In executing certain operations in providing functionality within or for an application program, the user object 10 is required to make access to the service object 11, e.g. to obtain functionality provided by the service object. Thus, the user object 10 generates a user request, requesting a particular interface needed in the communication between the user object and the service object. The user request is transmitted to the service object as indicated by arrow 151. If the interface is available at the service object, the service may commence immediately, however, if the interface is not available, the service object must obtain the interface adapter, as outlined before.

As a practical example, the user object and the service object may be part of an application program requiring the storage of data, e.g. a text processing application. In this case, the user object could be an object initializing the required storage operation, and the service object could be an object providing functionality in actually storing data. In this example, the user object could then be required to transmit data to the service object, e.g., data to be stored, or information on a location of data to be stored, may include information on data formats and similar.

If the service object provides the necessary interface, the user object can directly access the service object through the interface and transmit the required data.

However, if the user object is for example updated by including a new data format or similar, and the service object is not updated in correspondence thereto, the user object may not any longer be able to use the interface provided by the service object.

In this case the user object 10 will still request an interface, however, the interface will be determined to be not available at the service object 11, and therefore, the service object 11 will obtain an interface adapter as outlined before, for adapting the interface required by the user object, e.g., the updated interface, to the interface provided by the service object 11, i.e., the old interface which was not updated.

Even though any of the above example included distinct roles for the user object 10 and the service object 11, it is possible that these roles are reversed, i.e., the user object may function as service object and vice versa.

In the following, the elements of the adapter manager will be outlined in further detail.

The adapter manager 12 may preferably be realized as a software program allowing to select interface adapters from a plurality of offer-interface adapters. The adapter manager may be located on the same data processing device as the service object and/or the user object, however, the adapter manager may also be located on a separate device, e.g. a dedicated adapter manager unit. It is further possible that the adapter manager is realized at least partially in hardware, e.g. in order to speed up operations.

The adapter manager receiving module 121, the adapter manager determining module 122 and the adapter manager transmission module 123 may be formed as integral parts of the adapter manager or may be constituted by separate entities, e.g. software programs linked to the adapter manager or separate hardware devices linked to the adapter manager. The adapter manager receiving module, the adapter manager determining module and the adapter manager transmission module provide the required functionality for receiving adapter requests from service objects, selecting interface adapters from offer-interface adapters and transmitting interface adapters to the service object and/or the user object.

The adapter manager determining module 122 may preferably select an interface adapter from available interface adapters based on information received with the adapter request from the service object 11. This is preferably direct or indirect information on the interface requested by the user object and the interface is available at the service object, as outlined before.

The adapter manager determining module 122 may then perform the selection operation by searching for an interface adapter offering the request-interface, requested by the user object, and requiring interfaces directly or indirectly available at the service object.

The interface adapters available to the adapter manager 12 may be stored in a library of interface adapters (not shown), for example in a memory of the system, a memory of a data processing device including the adapter manager, or, the library may reside on a separate database.

While a single user object, service object and adapter manager is shown in Fig. 1, a plurality of user objects, service objects and adapter managers may be provided. It is possible that a plurality of adapter managers accesses the same library of interface adapters.

Communications between the user object 10, the service object 11 and the adapter manager 12, i.e. the transmission of the user request 151, of the adapter request 152, the interface adapter 153 or information on the interface adapter and the communication 154 between the user object and the service object may be executed via a system bus, if all elements shown in Fig. 1 reside on a single data processing device, or may include further internal communications.

If the elements shown in Fig. 1 reside on different physical entities, transmissions of the above outlined messages may be realized through local area networks or wide area networks connecting a plurality of data processing devices including one or more of the elements shown in Fig. 1, e.g. using packet switched communications, or, may include transmissions via dedicated communication links, including wireless transmissions.

For example, it is possible that the user object 10 resides on a client data processing device and the service object and/or the adapter manager reside on a server data processing device. In this case the user request 151 and the communication via the interface adapter 154 may be realized including dedicated communication links or wireless communications.

Even though in the above example the user object only requests a single interface, further embodiments are possible, wherein the user object requests a plurality of interfaces with the user request, in which case the adapter manager will select one or a plurality of interface adapters for providing communication between the user object and the service object.

The invention thus offers a solution to the problem of avoiding changing existing code and/or providing very large numbers of derivations of interfaces to accommodate all possible cases of communications between objects of an application program or a plurality of application programs.

The invention allows to create the required interface adapter implementations at runtime on demand, i.e. during the execution of an application program or a plurality of application programs upon request by a user object. This is achieved through aggregation of the interface adapter object.

An interface adapter may either be directly obtained from a library or an interface adapter implementation may be modified by the adapter manager to provide the required interface adapter. Thus, the interface adapters are aggregated to the service object by the adapter manager on demand during runtime. Aggregation means the coupling of an object implementation, e.g. a service object, with one or more partial - or other object (dependent) implementations in a way that the newly created object behaves like a single object to an environment, e.g. the user object requesting access to a service object. Thus, an interface adapter coupled to the service object may react as a single object.

An interface adapter may also be a partially or fully implemented object and use the interfaces offered by the aggregator, e.g. the service object, and which offers new interfaces for the created aggregate, e.g. the request-interface demanded by the user object. The aggregate thus may be the combination of the service object and the provided interface adapter which may behave as a single object from the viewpoint of the user object.

Thus, when a new interface is needed from a service object a method such as for example XInterface::queryInterface may be called. The service object may check its own list of implemented interfaces whether it supports the request-interface and may return a NULL pointer, if it does not support the request-interface. In this case, the service object may call the adapter manager. The adapter manager then checks whether it can find an interface adapter in a library, which implements the required interface, i.e. the interface requested by the user object, based on the interfaces offered by the service object itself and its static aggregates, as well as previous dynamically aggregated interfaces, i.e. interface adapters.

The adapters in the library may be specified by a list of offered interfaces and a list of needed interfaces. Thus, for example, if a simple adapter which implements an XIndexAccess based on an XName access would be specified by the list (XIndexAccess)/(XNameAccess). Then, if a service object implements an XNameAccess, but no XIndexAccess, the adapter manager would be able to select an interface adapter being able to emulate the XIndexAccess onto the XNameAccess offered by the service object.

An advanced adapter manager may even be able to use an indirect specification to find interface adapters. For example, in this case an XNameAccess could be emulated based on an XIndexAccess. However, in this case the sub-objects accessible by the XIndexAccess all have to offer an XName to make such an interface adapter possible. In other words, a required functionality may be accessed indirectly through an interface adapter to a method which allows to access the required functionality.

Objects which do not use an adapter manager in their XInterface::queryInterface implementation, so-called legacy objects, could be aggregated themselves within a factory which creates them to an aggregator, e.g. a service object, which is able to use the adapter manager of the invention. The minimum requirement in this case is only that the object can be aggregated itself.

The invention can be particularly useful to hide API (application program interface) changes without overloading new implementations of objects with support of old interfaces.

The API is a language and message format used by an application program to communicate with the operating system or some other system or controlled program such as a database management system or communications protocol. APIs are implemented by writing function calls in a program, which provide a linkage to the required subroutine for execution. Thus, an API implies that some program module is available in the computer to perform the operation or that it must be linked to the existing program to perform the tasks.

It may further be useful to make components useable in different API environments, for example OpenOffice.org API and Bonobo.

It is noted that a computer-readable medium may be provided having a program recorded thereon, where the program is to make a computer or system of data processing devices execute functions or operations of the features and elements of the above described embodiments. A computer-readable medium can be a magnetic or optical or other tangible medium on which a program is recorded, but can also be a signal, e.g., analog or digital, electromagnetic or optical, in which the program is embodied for transmission.

Further, a computer program product may be provided comprising the computer-readable medium.

In the following a further embodiment of the invention will be described with respect to Fig. 2.

Fig. 2 shows in more detail of a dynamic arrangement of a user object, an adapter and a service object according to another embodiment of the invention. The arrangement of Fig. 2 may be generated in a runtime environment on demand.

Fig. 2 illustrates a user object 21, an interface adapter 22 and a service object 23 which may have a constitution similar to the one outlined with respect to Fig. 1, however, the embodiment of Fig. 2 is not limited thereto.

Fig. 2 further shows a request-interface 221, being an interface requested by the user object requesting access to the service object 23, and being an interface available at the interface adapter 22.

An offer-interface 231 constitutes an interface available at the service object for accessing the service object 23, and at the same time is an interface needed by the interface adapter. The offer-interface 231 may constitute one of a plurality of interfaces available at the service object.

The example of Fig. 2 shows an interface adapter provided by an adapter manager such as adapter manager 12 of Fig. 1. The interface adapter 22 is arranged between the user object 21 and the service object 23 for allowing a communication between the user object and the service object. The communication may involve a transmission of data only from the user object 21 to the service object 23 via the interface adapter 22, or may include a bidirectional communication, e.g. for a feedback from the service object 23 to the user object 21.

As shown in the example of Fig. 2, the request-interface between the user object and the interface adapter is preferably part of the interface adapter, i.e. the request-interface 221 constitutes an interface which is offered by the interface adapter.

Further, the offer-interface 231 between the interface adapter 22 and the service object 23 preferably is an interface available at the service object, i.e., preferably constitutes an integral part of the service object. Accordingly, the offer-interface 231 is an interface which is required by the interface adapter.

In order to facilitate the selection process of interface adapters from a library of interface adapters, potentially having a large number of interface adapters, each interface adapter may therefore be defined by its offered interface, i.e. in Fig. 2 the request-interface 221, and, the interface adapter may further be defined by a required interface, e.g. the offer-interface 231 available at the service object 23.

Thus, if the adapter manager such as adapter manager 12 receives an adapter request specifying a request-interface and at least one offer-interface, the adapter manager preferably searches for an interface adapter providing the request-interface 221 and requiring the offer-interface 231.

It is possible that an interface adapter has more than one offered interfaces and provides for more than one required interface, to fit a single request-interface and at least one offer-interface.

It is noted that Fig. 2 only shows a schematic arrangement of the user object, interface adapter and service object, while in practical applications the interface adapter may not necessarily be physically linked to the service object and the user object. Instead, the interface adapter may be provided from the adapter manager to the service object by transmitting a pointer indicating an address location storing a code section constituting the interface adapter and further, the interface adapter may be made available to the user object for accessing the service object by transmitting from the service object 23 address information such as a pointer indicating a storage location of the interface adapter 22 to the user object 21. Thus, in a software environment, the necessary data transmissions may be kept at a minimum, e.g., only addresses need to be transmitted for providing the interface adapter between the user object 22 and the service object 23.

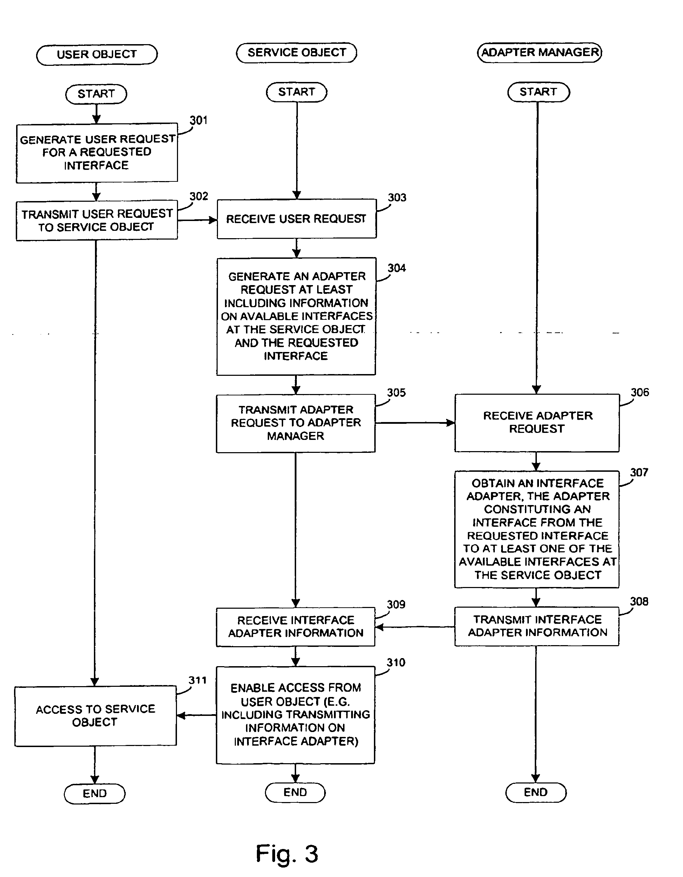

In the following a further embodiment of the invention will be described with respect to Fig. 3.

Fig. 3 illustrates sequences of operations for dynamic interface generation, executed at a user object, a service object and an adapter manager according to another embodiment of the invention. The operations shown in Fig. 3 may be executed using the system shown in Fig. 1, however, the embodiment of Fig. 3 is not limited thereto.

In a first operation 301 at the user object a user request is generated for a request-interface. The request may be generated at the user object upon determining that functionality provided by the service object is required. The interface specified in the user request thus will be an interface needed for communicating with the service object, in order to obtain the desired functionality from the service object. The user request may include information on the request-interface, such as a specification of the interface, or an identifier of the interface, such as a unique identifier assigned to the requested interface beforehand.

The user request generated at the user object in operation 301 may further include information on the user object itself, e.g. an identifier of the user object, in order to notify the service object about the identity of the user object.

In an operation 302 the user object transmits the user request to the service object, where it is received in an operation 303. The transmission may be performed as outlined with respect to previous embodiments.

In an operation 304 the service object generates an adapter request, the adapter request at least including information on offer-interfaces, i.e. interfaces available at the service object, and including information on the request-interface. The adapter request generated in operation 304 may further include information identifying the service object, such as an address of the service object or another unique identifier.

In an operation 305 the adapter request is transmitted from the service object to the adapter manager, where it is received in an operation 306. The transmission of the adapter request, including direct or indirect information on the offer-interfaces at the service object, may be performed as outlined with respect to previous embodiments.

At the adapter manager, in an operation 307 an interface adapter is obtained, the interface adapter constituting an interface from the request-interface to at least one of the offer-interfaces, available at the service object.

Since the service object may have a plurality of interfaces through which the required functionality may be accessed or obtained, not necessarily all interfaces available at the service object need to be considered by the interface adapter selection. All that is required is that the interface adapter provides the request-interface, i.e. the interface requested by the user object, and can connect to the offer-interfaces at the service object. The interface adapter may be obtained as outlined with respect to previous embodiments.

In an operation 308 the interface adapter is transmitted from the adapter manager to the service object where it is received in an operation 309. The transmission of the interface adapter may be performed as outlined with respect to previous embodiments.

At the service object, in operations 310 and 311 a service session between the user object and the service object is enabled, for example, the user object may be enabled to access the service object through the interface adapter. More particularly, the user object may access the service object through the request-interface, i.e. the interface needed by the user object, the interface adapter, and the at least one interface available at the service object.

Access from the user object to the service object via the interface adapter may be enabled by transmitting information specifying the interface adapter, such as address information or a pointer identifying a storage location of the interface adapter, to the user object.

Thereafter, the flow ends or further access sequences from user objects to service objects may be performed including cases where the user object and the service object change their roles, i.e., wherein the user object functions as service object and the service object functions as user object.

As outlined above, the invention allows that interface adapters, providing the required functionality to allow different objects to communicate with one another, may be obtained through the adapter manager on demand, e.g. in a runtime environment, and transmitted to a service object, in order to provide the service object with the required interface functionality to serve the user object.

Thus, interface adapters, providing the required functionality to allow different objects to access one another, may be obtained through the adapter manager on demand. Since the adapter request includes the necessary information on the request-interface and the interfaces offered by the service object, the adapter manager may obtain an appropriate interface adapter, which for example may be previously coded and stored at a location accessible by the adapter manager.

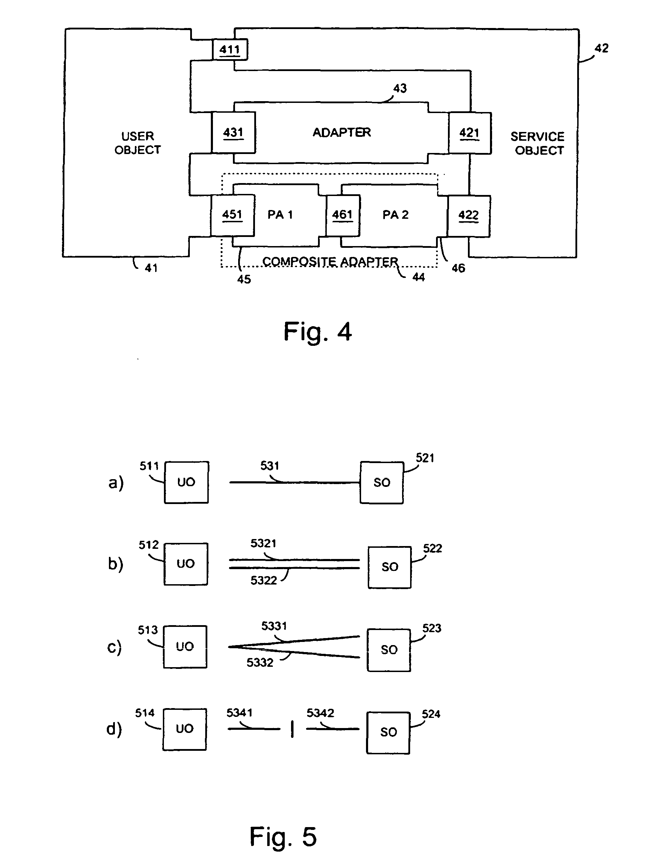

In the following a further embodiment of the invention will be described with respect to Fig. 4.

Fig. 4 illustrates a further arrangement of a user object, interface adapters and a service object, according to another embodiment of the invention, showing various interface arrangements between the user object and the service object. The shown example of user object, interface adapters and service object may be provided using the system of Fig. 1, however, the embodiment of Fig. 4 is not limited thereto.

Fig. 4 shows an example where not only a single interface adapter is provided between a user object and a service object, as for example outlined with respect to Fig. 2, but a plurality of interface resources are provided together to enable the a user object to access a service object.

Fig. 4 illustrates a user object 41 which may be similar to the user object outlined with respect to previous embodiments, the user object demanding a request-interface. And, Fig. 4 illustrates a service object 42, which also may be similar to service objects outlined with respect to previous embodiments, having at least one offer-interface available.

An interface adapter 43 between the user object and the service object includes an offered interface 431, fitting at least part of an request-interface requested by the user object, for enabling partial access from the user object to the service object. The service object includes an offer-interface 421, constituting an interface needed by the interface adapter 43.

Moreover, the example of Fig. 4 shows an offer-interface 411 available at the service object, fitting to at least part of the request-interface requested by the user object, for providing partial direct access from the user object to the service object.

And, Fig. 4 illustrates a composite adapter 44, also fitting part of the request-interface, also for allowing partial access from the user object to the service object. The composite adapter 44 includes a first interface adapter 45 and a second interface adapter 46. These two interface adapters 45 and 46 may also be termed partial adapters, as they are series connected to form one interface adapter, i.e. the composite adapter 44.

The first interface adapter 45 includes an offered interface 451 at the user object side, which fits part of the request-interface requested by the user object, and requires an intermediate interface 461, the intermediate interface 461 being provided by the second interface adapter 46. Further, the second interface adapter 46 requires an interface, offer-interface 422 available at the service object 42.

Differing from the examples illustrated with respect to Fig. 2, the example of Fig. 4 shows various alternatives for providing access from the user object to the service object.

The user object usually only requests a single request-interface, as outlined above, and this request-interface may be subdivided into the three logical entities illustrated by the three protruding portions at the user object 41.

However, it is also possible that the user object requests a plurality of request-interfaces, e.g. three different request-interfaces in the example of Fig.4.

In the example of Fig. 4, a first part of the request-interface (or a first request-interface), can be directly served by an interface available at the service object 42, the interface 421. In this case, upon receiving the user request, requesting the interface from the service object, the service object may determine that at least part of the request-interface can be accommodated by the interface 421 available at the service object. Thus, a direct service for this particular part of the request-interface can be performed.

Further, a second part of the request-interface (or a second request-interface) in Fig. 4 is accommodated by the interface adapter 43. The interface adapter 43 includes the offered interface 431, allowing to accommodate a second part of the request-interface, fitting to the second part of the request-interface requested by the user object. Further, the interface adapter 43 connects to the offer-interface 421 available at the service object. Thus, similar to the example of Fig. 2 the interface adapter 43 is provided from a user object to the service object, however, in this case from only a part of the request-interface to an offer-interface at the service object (or a plurality of offer-interfaces at the service object).

Further, in the example shown in Fig. 4, a third logical part of the request-interface (or a third request-interface) is accommodated by the composite adapter 44, connecting to the offer-interface 422 available at the service object. The composite adapter comprises a series connection of the two interface adapters 45 and 46, wherein the first interface adapter 45 and the second interface adapter 46 can be connected through an intermediate interface 461. Thus, the intermediate interface 461 constitutes an interface required by the first interface adapter 45 and constitutes an interface offered by the second interface adapter 46. Accordingly, the third part of the request-interface can be accommodated by the composite adapter connecting the third part of the request-interface via the interface 451 offered by the first interface adapter 45, the intermediate interface 461 offered by the second interface adapter 46 and the interface 422 constituting an interface available at the service object.

In general, an adapter manager determining module, such as the adapter manager determining module illustrated with respect to Fig. 1 may, if an adapter is not available, generate a composite adapter based on a plurality of adapters, i.e. the first and second interface adapters 45 and 46. In this case the adapter manager will still receive an adapter request specifying a request-interface and offer-interfaces at the service object, but, if a direct interface adapter is not available, the adapter manager may concatenate a plurality of interface adapters to provide the required bridge from the request-interface to the at least one interface available at the service object.

It is noted that the shown example of Fig. 4 only serves illustration purposes, further arrangements are possible, for example a plurality of composite adapters may be provided, a plurality of interface adapters such as interface adapter 43 and/or a plurality of direct interface connections, i.e. through interface such as the interface 421 available at the service object 42 may be provided.

The adapter manager, once it has aggregated a composite adapter, may add the composite adapter to a library of adapters, in order to avoid a repeated aggregation of composite adapters upon adapter requests from service objects.

A composite adapter added to the library may be defined exactly as a "regular" interface adapter, i.e. by an offered interface, in the present case interface 451, and required interfaces, in the present case of Fig. 4, offer-interface 422 of the service object. Thus, once a composite adapter is stored in a library of interface adapters, it may be handled exactly as a regular interface adapter.

However, since the composite adapter connects at least two partial interface adapters, processing complexity is usually higher than using a single interface adapter. Therefore, the adapter manager may store a classifier in association with the composite adapter, the classifier indicating that the composite adapter is a composite adapter. Further, the composite adapter may be selected from the library of adapters only if a corresponding adapter with a corresponding at least one offer-interface and request-interface does not exist, and it can be avoided that a sub-optimal adapter, i.e. a composite adapter is selected from the library of adapters, if an equivalent "not composite" adapter exists.

It is further possible that classifiers are stored with any interface adapter stored in a library of interface adapters, i.e. not only in connection with composite adapters.

Then, if a plurality of interface adapters would generally be available to serve a specific adapter request from a service object, a most suitable interface adapter can be selected by the adapter manager. For example, the classifiers could specify qualities such as computational complexity of the respective interface adapter, could specify a version number and similar.

In the following a further embodiment of the invention will be described with respect to Fig. 5.

Fig. 5 illustrates different interface adapters from a user object to a service object according to another embodiment of the invention. In particular, Fig. 5 shows four arrangements a), b), c) and d) of a user object, an interface adapter and a service object.

In Fig. 5 the user objects are schematically illustrated on the left side, the service objects are schematically illustrated on the respective right side and the user object and the service objects are connected by interface adapters, schematically illustrated by straight lines.

The examples of Fig. 5 show different compositions of interface adapters from a respective request-interface, i.e. from an interface requested by a user object, to at least one offer-interface at the respective service objects. As outlined with respect to the previous embodiments, the interface adapters of Fig. 5 enable the respective user objects to access the respective service objects, which may involve a one directional transmission of data from the user objects to the service objects, but may include also return messages transmitted from the service objects to the user objects.

In the first example a), a user object 511 is schematically illustrated on the left side, and a service object 521 is schematically illustrated on the right side.

An interface adapter 531 shown by the straight line between the user object and the service object enables the user object 511 to access the service object 521. The interface adapter 531 may be obtained by an adapter manager, as outlined with respect to previous embodiments. The interface adapter 531 may be a "regular" interface adapter, as for example outlined with respect to Fig. 2, and may provide a connection from a request-interface, requested from the user object, to at least one of at least one offer-interface available at the service object 521.

However, it is also possible that the interface adapter 531 provides a connection from a plurality of request-interfaces, requested by the user object, to the service object.

In the second example b) a user object 512 is illustrated on the left-hand side and a service object 522 is illustrated on the right-hand side.

Two interface adapters 5321 and 5322 are illustrated between the user object 512 and the service object 522 by parallel straight lines. The two interface adapters 5321 and 5322 connect from a request-interface, requested at the user object 512 to one offer-interface, available at the service object 522. For example, the interface adapters may each connect from a part of the request-interface to a part of the offer-interface. But it is also possible that the interface adapters connect from multiple request-interfaces to multiple offer-interfaces.

The two interface adapters 5321 and 5322 constitute a composite adapter, similar to the composite adapters outlined with respect to previous embodiments.

The example c) of Fig. 5 illustrates a user object 513 on the left-hand side and a service object 523 on the right-hand side.

Again, two interface adapters 5331 and 5332 connect from the user object 513 to the service object 523, however, differing from the example b), the interface adapters are not provided in parallel. The interface adapter 5331 connects from a part of the request-interface, requested at the user object 513, to a first group of at least one offer-interface, available at the service object 523, and the interface adapter 5332 connects from a second part of the request-interface to a second set of at least one offer-interface at the service object 523.

As in example b) the interface adapters 5331 and 5332 of the example c) also constitute a composite adapter wherein interface adapters are arranged in parallel to another, connecting from a user object to a service object.

In the example d) a user object 514 and a service object 524 are illustrated on the left-hand side and right-hand side, respectively.

In this case two interface adapters 5341 and 5342 are concatenated to connect from the user object 514 to the service object 524. For example, the interface adapter 5341 connects from a request-interface, requested at the user object 514, to at least one intermediate interface, and the interface adapter 5342 connects from the at least one intermediate interface to at least one offer-interface, available at the service object 524. Thus, the interface adapters 5341 and 5342 constitute a composite adapter, such as outlined with respect to previous embodiments, e.g. the composite adapter 44 shown in Fig. 4.

While in Fig. 5 the interface adapters are shown in individual examples, these individual examples of interface adapters may be combined with one another, e.g. to form combinations of the interface adapters or composite interface adapters of the examples a), b), c) and d). Thus, composite adapters based on a combination of the above examples may be provided, i.e., combining "regular" interface adapters and/or composite adapters with "parallel" connection of interface adapters and/or composite adapters with "series" connection of interface adapters and combinations thereof.

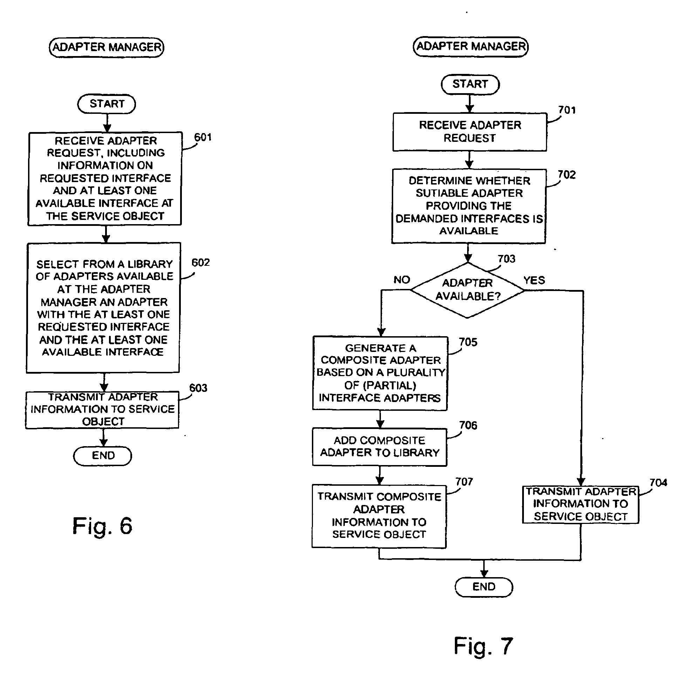

In the following a further embodiment of the invention will be described with respect to Fig. 6.

Fig. 6 illustrates operations at the adapter manager according to another embodiment of the invention, particularly illustrating operations to select interface adapters. The operations of Fig. 6 may be carried out by the system shown in Fig. 1, however, the embodiment of Fig. 6 is not limited thereto.

In a first operation 601, the adapter manager receives an adapter request, for example from a service object such as service object 11 of Fig. 1. The adapter request includes information on at least one request-interface, requested by a user object, such as user object 10 of Fig. 1, and information on at least one offer-interface, available at the service object.

In an operation 602 the adapter manager selects from a library of adapters available at the adapter manager an interface adapter connecting from at least one request-interface, requested by the user object, to at least one offer-interface, available at the service object. Since the interface adapters in the library are preferably defined by a list of respectively offered interfaces and a list of respectively needed interfaces, the adapter manager may select an interface adapter with a list of offered interfaces matching the request-interfaces, requested by the user object, and with a list of needed interfaces, matching the offer-interfaces, available at the service object.

Preferably, the identified interface adapter connects from all request-interfaces to all offer-interfaces, or subgroups thereof.

If the adapter manager determines that more than one adapter is available, the adapter manager may select one of the interface adapters based on classifiers stored in connection with the interface adapters. The classifiers may specify qualities of the respective interface adapters, such as computational complexity, creation date, memory usage, programming language and binary compatibility, i.e. same system environment, or may indicate whether the interface adapter is a composite adapter, as outlined before, or similar.

Based on the classifiers, the adapter manager may select the optimum interface adapter.

In an operation 603 the interface adapter selected by the adapter manager is transmitted to the service object, e.g. as outlined with respect to previous embodiments. For example, a pointer indicating a storage location of the selected interface adapter may be transmitted to the service object, and the service object may then notify the user object by forwarding the pointer to the interface adapter, thus enabling the user object to access the service object.

Thereafter the flow ends, or further interface adapters are selected for further user requests.

In the following a further embodiment of the invention will be described with respect to Fig. 7.

Fig. 7 illustrates operations at an adapter manager, particularly showing steps for generating a composite adapter, according to another embodiment of the invention. The operations shown in Fig. 7 may be carried out using the system of Fig. 1, however, the embodiment of Fig. 7 is not limited thereto.

In a first operation 701 the adapter manager again receives an adapter request, for example from a service object such as service object 11 of Fig. 1.

In an operation 702 the adapter manager determines whether a suitable adapter from the at least one request-interface to the at least one offer-interface is included in a library of interface adapters. This operation may be performed as for example outlined before with respect to Fig. 6.

In an operation 703 it is decided whether a suitable interface adapter is available.

If in operation 703 the decision is "YES", in an operation 704 the interface adapter is transmitted to the service object, as for example outlined before.

If in operation 703 the decision is "NO", indicating that a suitable interface adapter is not available, in an operation 705 the adapter manager aggregates a composite adapter based on a plurality of "partial" interface adapters. These interface adapters to form a composite adapter may be interface adapters stored in the library of interface adapters and may itself include composite adapters, as for example outlined with respect to Fig. 5.

The composite adapter is generated by combining the individual interface adapters of the composite adapter to form a single object which may behave like a single object to an environment. The aggregation of interface adapters to form a composite adapter may also involve adding for example a code section for combining the interface adapters, the code section being generated or obtained by the adapter manager.

In an operation 706 the composite adapter is added to the library of adapters, and thus the generated composite adapter is available for further adapter requests. It is noted that this composite adapter may itself again form part of a further composite adapter, generated upon further adapter requests. A classifier which may be stored in connection with the interface adapters may reflect the nature of the composite adapter, whether it includes further composite adapters or not, and similar.

In an operation 707 the composite adapter is transmitted to the service object, e.g. by transmitting a single address or pointer to the service object, or by transmitting a plurality of pointers or addresses to the service object. Preferably, however, as the composite adapter may act as a single object to the environment, a single address may be transmitted.

Thereafter, i.e. after operation 707 and 704 the flow ends, or further adapter requests are processed by the adapter manager.

While the above operations have been outlined in a specific sequence, a variation of this sequence within reason is possible. For example, the operation 706 may be performed at another point in time.

In a further embodiment it is possible that the adapter manager selects an interface adapter based on indirect specifications to find an interface adapter. In this case, an interface could be emulated based on another interface, if the corresponding sub-objects accessible by the underlying interface make such an adapter possible.

For example, the adapter request from the service object may include information on date or types of data available at the service object, and based thereon, the adapter manager may select an indirect adapter, the indirect adapter allowing the user object to access the data at the service object through the at least one interface available at the service object.

In this case the adapter manager would select an interface adapter based on the information on the data or types of data with the user request.

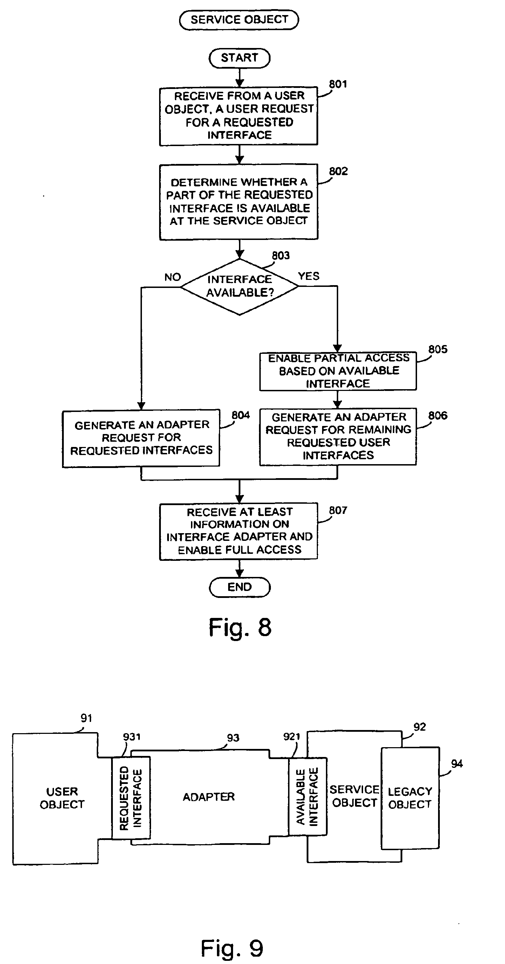

In the following a further embodiment of the invention will be described with respect to Fig. 8.

Fig. 8 illustrates operations at a service object according to another embodiment of the invention. The operations of Fig. 8 may be executed by the system of Fig. 1, however, the embodiment of Fig. 8 is not limited thereto.

The present embodiment particularly illustrates how interfaces available at a service object may directly be used for connecting to a user object, besides providing an interface adapter through an adapter manager.

In a first operation 801 the service object receives from a user object a user request for at least one request-interface, as for example outlined with respect to previous embodiments.

In an operation 802 the service object determines whether at least a part of the requested at least one interface is available at the service object.

In an operation 803 it is decided whether such an interface is available at the service object.

If in operation 803 the decision is "NO", indicating that such an interface is not available, in an operation 804 the service object generates an adapter request for the at least one request-interface, for example as outlined with respect to previous embodiments.

If in operation 803 the decision is "YES", indicating that an interface determined in operation 802 is available, in an operation 805 the user object is enables to access the service object based on the interface determined in operation 802.

In an operation 806 the service object then generates an adapter request for the remaining part, or the remaining, request-interfaces, requested by the user object.

After operations 804 and 806 in an operation 807 the interface adapter is received from the adapter manager and full access may be enabled to the service object.

Accordingly, with the operations outlined in Fig. 8, offer-interfaces at the service object may directly be used for enabling at least partial access to the service object by the user object.

While the above operations have been outlined in a specific sequence, a variation of this sequence within reason is possible. For example operation 805 may be performed concurrently with operation 807.

In the following a further embodiment of the invention will be described with respect to Fig. 9.

Fig. 9 illustrates a case, where the functionality of the invention may be applied to objects without ability of dynamic provision of interfaces.

Fig. 9 shows a user object 91, a service object 92 providing an offer-interface 921. An interface adapter 93 providing an interface 931, constituting an interface requested by the user object is arranged between the user object and the service object, as outlined with respect to previous embodiments, for example Fig. 2.

Further, Fig. 9 shows a legacy object 94, being wrapped by the service object 92. The legacy object may be an object which was created at an earlier point in time, without the functionality of the invention. Therefore, the service object 92 is provided for wrapping the legacy object 94, thus allowing the invention to employ the functionality of legacy objects.

The legacy object is an object which is not arranged to generate an adapter request for an unavailable interface, i.e. for a request-interface requested by a user object which is not available at the service object. The capability of generating an adapter request is provided by the service object 92, being linked to the legacy object, or wrapping the legacy object. The link between the service object and the legacy object may be provided through the use of software pointers or similar.

The service object for wrapping or linking to the legacy object may be generated by a wrapper object factory, which essentially may be constituted by a library of a large number of service objects which may be selected by the wrapper object factory to be added to individual legacy objects. Further, the legacy object itself may also be selected by a legacy object factory, similar as the service object, from a library of legacy objects. A factory can be any means able to select objects from libraries for suiting specific needs, e.g. to provide functionality to a requesting entity.

Accordingly, the invention allows to dynamically generate not only interface adapters on runtime, i.e., during operations as for example executing an application program, but also allows to dynamically provide service objects for adding required functionality to legacy objects which are not able to generate adapter requests.

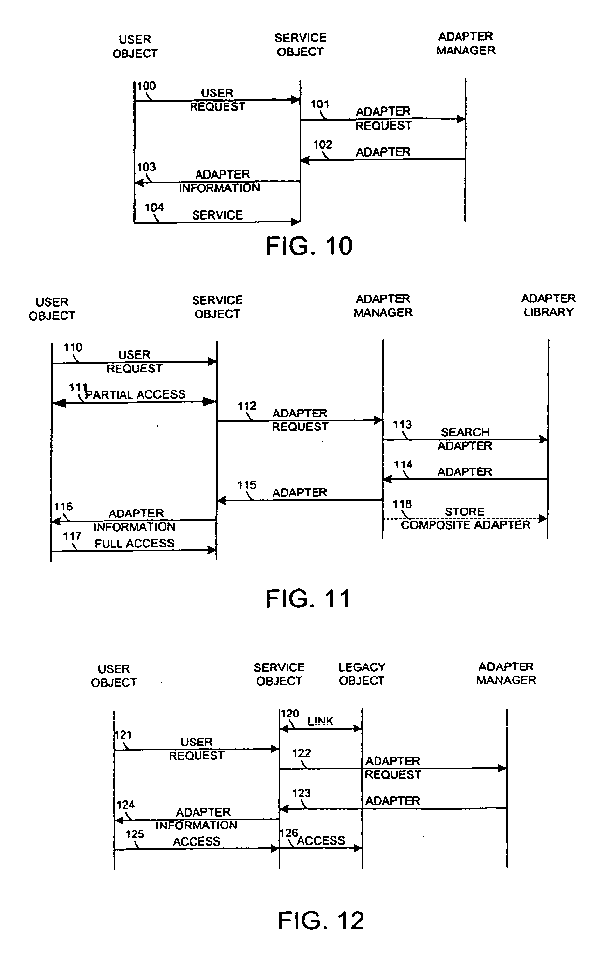

In the following a further embodiment of the invention will be described with respect to Fig. 10.

Fig. 10 outlines a time sequence of transmissions between a user object, a service object and an adapter manager according to another embodiment of the invention. The sequence of transmissions of Fig. 10 may be carried out using the system of Fig. 1, however, the embodiment of Fig. 10 is not limited thereto.

In a first operation 100 a user request is transmitted from the user object to the service object, as for example outlined with respect to previous embodiments.

Thereupon, in an operation 101 the service object generates and transmits an adapter request to the adapter manager, also as outlined with respect to previous embodiments.

In an operation 102 the adapter manager transmits a selected interface adapter to the service object, e.g. an address of the interface adapter, or a pointer, or a code sequence making up the interface adapter.

In an operation 103 the service object transmits the interface adapter or an interface adapter address or a pointer to the user object, thus enabling the user object to access the service object in an operation 104.

Even if operation 104 is shown one-directional, a bidirectional transmission may be included.

In the following a further embodiment of the invention will be described with respect to Fig. 11.

Fig. 11 shows a time sequence of transmissions between a user object, a service object, an adapter manager and an adapter library according to another embodiment of the invention. The operations may be carried out using the system of Fig. 1, however, the embodiment of Fig. 11 is not limited thereto.

In a first operation 110 the user object transmits a user request to the service object, for example as outlined with respect to previous embodiments.

In a second operation 111, if an interface for enabling partial direct access to the service object by the user object is available, as for example outlined with respect to Fig. 8, a partial access is enabled for the user object.

In an operation 112 the service object generates an adapter request based on a remaining part of remaining request-interfaces, requested by the user object, as outlined with respect to previous embodiments.

In an operation 113 the adapter manager searches a suitable interface adapter, an interface adapter being returned from the adapter library in an operation 114. This may involve selecting and composing composite adapters, as outlined with respect to previous embodiments.

In an operation 115 the adapter manager transmits the selected interface adapter or generated composite adapter to the service object, e.g. physically or via an address, as outlined before.

In an operation 116 the service object transmits the adapter address to the user object, enabling full access to the service object by the user object in an operation 117.

If a composite adapter was aggregated by the adapter manager in this process, in an optional operation 118, outlined by a broken line, the composite adapter may be stored in the adapter library for making the composite adapter available for further adapter requests.

While the operations shown in Fig. 11 are illustrated in a certain time sequence, variations of the time sequence of operations is possible, for example, the enablement of partial access of operation 111 may be concurrent with operation 117, to enable full access to the service object in a single operation.

In the following, a further embodiment of the invention will be described with respect to Fig. 12. Fig. 12 shows a time sequence of operations at a user object, a service object, a legacy object and an adapter manager according to another embodiment of the invention. The operations of Fig. 12 may be carried out using the system of Fig. 1, however, the embodiment of Fig. 12 is not limited thereto.

In a first operation 120 a link is established between the service object and the legacy object, as for example outlined with respect to Fig. 9. The legacy object, itself not being able to generate an adapter request, is linked to the service object in order to include legacy objects, e.g. "old" objects into the system of the invention.

On behalf of the legacy object, in an operation 121 the service object receives a user request from a user object. In an operation 122 the service object transmits an adapter request to the adapter manager and receives an interface adapter in an operation 123, as outlined with respect to previous embodiments.

In an operation 124 the interface adapter or the interface adapter address or pointer is transmitted to the user object, enabling access from the user object to the service object in an operation 125. The user access is intended to obtain functionality of the legacy object, and therefore, since the legacy object and the service object are linked, in an operation 126 the functionality of the legacy object may be accessed by the user object through the service object.

The embodiment of Fig. 12 illustrates, how legacy objects, i.e. objects not adapted according to the invention, may be wrapped by service objects, providing the capability of generating adapter requests and handling interface adapters.

It is noted that a computer-readable medium may be provided having a program recorded thereon, where the program is to make a computer or system of data processing devices execute functions or operations of the features and elements of the above described embodiments of Figs. 1 - 12.

A computer-readable medium can be a magnetic or optical or other tangible medium on which a program is recorded, but can also be a signal, e.g., analog or digital, electromagnetic or optical, in which the program is embodied for transmission.

Further, a computer program product may be provided comprising the computer-readable medium.

As shown in the above description, the invention allows a dynamic generation of interfaces between user objects and service objects, by providing suitable interface adapters on demand, on runtime.

The interface adapters for connecting from user objects to service objects can be generated beforehand and stored in a library of adapters and then selected or aggregated upon demand. Thus, costly rewriting of code for adding all possible interface configurations to existing code is not necessary, it is only required to write the required interface adapters and to make them available through the adapter manager.

Accordingly, existing code does not have to be changed, when part of a number of objects of an application program or a plurality of application programs is updated. Further, even if "old" code, i.e. legacy object do not have the functionality of generating adapter requests, service objects linking to the legacy objects can be provided, allowing to use legacy objects in a system according to the invention.

In the following, a further embodiment of the invention will be described. An adapter manager for dynamic interface generation may be embodied as follows:
1). Adapter manager for dynamic interface generation, including
   a code section containing instructions to receive from a service object an adapter request at least including information on at least one offer-interface offered by the service object, and a request-interface demanded by a user object;
   a code section containing instructions to obtain an interface adapter from the request-interface to at least one of the at least one offer-interfaces offered by the service object;
   a code section containing instructions to transmit at least information on the interface adapter to the service object for enabling the user object to access the service object.
2). Adapter manager of 1), including a code section containing instructions to obtain the interface adapter from a library of interface adapters available at the adapter manager.
3). Adapter manager of 1), including a code section containing instructions to obtain an interface adapter based on a list of offered interfaces, including at least one offered interface, and a list of needed interfaces, including at least one needed interface.
4). Adapter manager of 1), including a code section containing instructions to, if more than one interface adapter is available, select an interface adapter based on a classifier stored in connection with the interface adapters.
5). Adapter manager of 1), including a code section containing instructions to, if an interface adapter is not available, generate a composite adapter based on a plurality of interface adapters.
6). Adapter manager of 5), wherein the composite adapter includes a code section containing instructions of a first interface adapter connecting the request-interface to at least one intermediate interface and a code section containing instructions of a second interface adapter connecting the at least one intermediate interface to the at least one offer-interface.
7). Adapter manager of one 5) or 6), wherein the composite adapter includes a code section containing instructions of a third interface adapter connecting a first part of the request-interface to the at least one offer-interface, and a code section containing instructions of a fourth interface adapter connecting a second part of the request-interface to the at least one offer-interface.
8). Adapter manager of 1), including a code section containing instructions to add the composite adapter to the library of interface adapters.
9). Adapter manager of 1), including a code section containing instructions to store a classifier in association with the composite adapter, the classifier indicating that the composite adapter is a composite adapter and wherein a composite adapter is selected from the library of interface adapters only if a corresponding interface adapter with corresponding at least one offer-interface and request-interface does not exist.
10). Method of 1), wherein
   the adapter request includes information on an access interface at the service object, allowing the adapter manager to access the service object to determine offer-interfaces available at the service object.
11). Adapter manager of 1), wherein
   the adapter request includes information on data available at the service object; and
   including a code section containing instructions to select an indirect interface adapter, the indirect interface adapter allowing the user object to access the data at the service object through at least one interface available at the service object.

Further, a service object for dynamic interface generation may be embodied as follows:
12). Service object for dynamic interface generation, including
   a code section containing instructions to receive from a user object a user request for a request-interface;
   a code section containing instructions to generate an adapter request for transmission to an adapter manager, the adapter request at least including information on offer-interfaces, offered by the service object, and the request-interface;
   a code section containing instructions to transmit the adapter request to the adapter manager to instruct the adapter manager to obtain an interface adapter from the request-interface to at least one of the offer-interfaces at the service object; and
   a code section containing instructions to receive at least information on the interface adapter for enabling an access from the user object based on the interface adapter.
13). Service object of 12), including a code section containing instructions to transmit an address of the interface adapter to the user object for enabling the user object to access the service object.
14). Service object of 12), including
   a code section containing instructions to determine whether a part of the request-interface is available at the service object and serving the user object based on the part of the available request-interface; and
   a code section containing instructions to generate the adapter request based on the remaining part of the request-interface.
15). Service object of 12), wherein the service object includes a link to a legacy object, the legacy object being an object not arranged to generate an adapter request for an unavailable interface.
16). Service object of 15), including
   a wrapper object factory for generating code instructions of the service object; and
   a legacy object factory for generating code instructions of the legacy object.

## Claims

1. Method of dynamic interface generation at an adapter manager, including
receiving (306) from a service object an adapter request at least including information on at least one offer-interface offered by the service object, and a request-interface demanded by a user object, the user object requiring a functionality provided by the service;
obtaining an interface adapter (307) from the request-interface to at least one of the at least one offer-interfaces offered by the service object; and
transmitting (308) at least information on the interface adapter to the service object for enabling the user object to access the service object.

2. Method of claim 1, wherein the interface adapter is selected from a library of interface adapters available at the adapter manager.

3. Method of one of the preceding claims, including selecting an interface adapter based on a list of offered interfaces, including at least one offered interface, and a list of needed interfaces, including at least one needed interface.

4. Method of one of the preceding claims, including, if more than one interface adapter is available, selecting an interface adapter based on a classifier stored in connection with the interface adapters.

5. Method of one of the preceding claims, including, if an interface adapter is not available, generating a composite adapter based on a plurality of interface adapters.

6. Method of claim 5, wherein the composite adapter includes a first interface adapter connecting the request-interface to at least one intermediate interface and a second interface adapter connecting the at least one intermediate interface to the at least one offer-interface.

7. Method of one of the claims 5 and 6, wherein the composite adapter includes a third interface adapter connecting a first part of the request-interface to the at least one offer-interface, and a fourth interface adapter connecting a second part of the request-interface to the at least one offer-interface.

8. Method of one of the preceding claims, including adding the composite adapter to the library of interface adapters.

9. Method of one of the preceding claims, including storing a classifier in association with the composite adapter, the classifier indicating that the composite adapter is a composite adapter and wherein a composite adapter is selected from the library of interface adapters only if a corresponding interface adapter with corresponding at least one offer-interface and request-interface does not exist.

10. Method of one of the preceding claims, wherein
the adapter request includes information on an access interface at the service object, allowing the adapter manager to access the service object to determine offer-interfaces available at the service object.

11. Method of one of the preceding claims, wherein
the adapter request includes information on data available at the service object; and
an indirect interface adapter is selected, the indirect adapter allowing the user object to access the data at the service object through at least one interface available at the service object.

12. Method of one of the preceding claims, including
determining whether a part of the request-interface is available at the service object and serving the user object based on the part of the available request-interface; and
generating the adapter request based on the remaining part of the request-interface.

13. Method of one of the preceding claims, wherein the service object includes a link to a legacy object, the legacy object being an object not arranged to generate an adapter request for an interface.

14. Method of claim 13, wherein
the service object is provided by a wrapper object factory; and
the legacy object is provided by a legacy object factory.

15. Method of dynamic interface generation for a service object, including
receiving (303) at the service object from a user object, a user request for a request-interface, the user object requiring a functionality provided by the service;
generating (304) an adapter request for transmission to an adapter manager, the adapter request at least including information on offer-interfaces, offered by the service object, and the request-interface;
transmitting (305) the adapter request to the adapter manager to instruct the adapter manager to obtain an interface adapter from the request-interface to at least one of the offer-interfaces at the service object; and
receiving (309) at least information on the interface adapter and enabling an access from the user object based on the interface adapter.

16. Method of claim 15, wherein the service object transmits an address of the interface adapter to the user object for enabling the user object to access the service object.

17. Method of one of the claims 15 - 16, including
determining whether a part of the request-interface is available at the service object and serving the user object based on the part of the available request-interface; and
generating the adapter request based on the remaining part of the request-interface.

18. Method of one of the claims 15 - 17, wherein the service object includes a link to a legacy object, the legacy object being an object not arranged to generate an adapter request for an unavailable interface.

19. Method of claim 18, wherein
the service object is provided by a wrapper object factory; and
the legacy object is provided by a legacy object factory.

20. Method of one of the claims 15 - 19, wherein the interface adapter is selected from a library of interface adapters available at the adapter manager.

21. Method of one of the claims 15 - 20, including selecting an interface adapter based on a list of offered interfaces, including at least one offered interface, and a list of needed interfaces, including at least one needed interface.

22. Method of one of the claims 15 - 21, including, if more than one interface adapter is available, selecting an interface adapter based on a classifier stored in connection with the interface adapters.

23. Method of one of the claims 15 - 22, including, if an interface adapter is not available, generating a composite adapter based on a plurality of interface adapters.

24. Method of claim 23, wherein the composite adapter includes a first interface adapter connecting the request-interface to at least one intermediate interface and a second interface adapter connecting the at least one intermediate interface to the at least one offer-interface.

25. Method of one of the claims 23 and 24, wherein the composite adapter includes a third interface adapter connecting a first part of the request-interface to the at least one offer-interface, and a fourth interface adapter connecting a second part of the request-interface to the at least one offer-interface.

26. Method of one of the claims 15 - 25, including adding the composite adapter to the library of interface adapters.

27. Method of one of the claims 15 - 26, including storing a classifier in association with the composite adapter, the classifier indicating that the composite adapter is a composite adapter and wherein a composite adapter is selected from the library of interface adapters only if a corresponding interface adapter with corresponding at least one offer-interface and request-interface does not exist.

28. Method of one of the claims 15 - 27, wherein
the adapter request includes information on an access interface at the service object, allowing the adapter manager to access the service object to determine offer-interfaces available at the service object.

29. Method of one of the claims 15 - 28, wherein
the adapter request includes information on data available at the service object; and
an indirect interface adapter is selected, the indirect interface adapter allowing the user object to access the data at the service object through at least one interface available at the service object.

30. A program having instructions adapted to carry out the method of one of the preceding claims.

31. A computer readable medium, in which a program is embodied, where the program is to make a computer execute the method of one of the claims 1 - 29.

32. A computer program product comprising the computer readable medium according to claim 31.

33. Adapter manager for dynamic interface generation, including
an adapter manager receiving module for receiving from a service object an adapter request at least including information on at least one offer-interface offered by the service object, and a request-interface demanded by a user object, the user object requiring a functionality provided by the service;
an adapter manager determining module for obtaining an interface adapter from the request-interface to at least one of the at least one offer-interfaces offered by the service object;
an adapter manager transmission module for transmitting at least information on the interface adapter to the service object for enabling the user object to access the service object.

34. Adapter manager of claim 33, wherein the adapter manager determining module is arranged to obtain the interface adapter from a library of interface adapters available at the adapter manager.

35. Adapter manager of one of the claims 33 and 34, wherein the adapter manager determining module is arranged to obtain an interface adapter based on a list of offered interfaces, including at least one offered interface, and a list of needed interfaces, including at least one needed interface.

36. Adapter manager of one of the claims 33 - 35, wherein the adapter manager determining module is arranged, if more than one interface adapter is available, to select an interface adapter based on a classifier stored in connection with the interface adapters.

37. Adapter manager of one of the claims 32 - 36, wherein the determining module, if an interface adapter is not available, is arranged to generate a composite adapter based on a plurality of interface adapters.

38. Adapter manager of claim 37, wherein the composite adapter includes a first interface adapter connecting the request-interface to at least one intermediate interface and a second interface adapter connecting the at least one intermediate interface to the at least one offer-interface.

39. Adapter manager of one of the claims 37 and 38, wherein the composite adapter includes a third interface adapter connecting a first part of the request-interface to the at least one offer-interface, and a fourth interface adapter connecting a second part of the request-interface to the at least one offer-interface.

40. Adapter manager of one of the claims 33 - 39, wherein the determining module is arranged to add the composite adapter to the library of interface adapters.

41. Adapter manager of one of the claims 33 - 40, arranged to store a classifier in association with the composite adapter, the classifier indicating that the composite adapter is a composite adapter and wherein a composite adapter is selected from the library of interface adapters only if a corresponding interface adapter with corresponding at least one offer-interface and request-interface does not exist.

42. Method of one of the claims 33 - 41, wherein
the adapter request includes information on an access interface at the service object, allowing the adapter manager to access the service object to determine offer-interfaces available at the service object.

43. Adapter manager of one of the claims 33 - 42, wherein
the adapter request includes information on data available at the service object; and
the adapter manager determining module is arranged to select an indirect interface adapter, the indirect interface adapter allowing the user object to access the data at the service object through at least one interface available at the service object.

44. Service object for dynamic interface generation, including
a service object receiving module for receiving from a user object a user request for a request-interface, the user object requiring a functionality provided by the service;
a request generating module for generating an adapter request for transmission to an adapter manager, the adapter request at least including information on offer-interfaces, offered by the service object, and the request-interface;
a service object transmission module for transmitting the adapter request to the adapter manager to instruct the adapter manager to obtain an interface adapter from the request-interface to at least one of the offer-interfaces at the service object; and
wherein the service object receiving module is arranged to receive at least information on the interface adapter for enabling an access from the user object based on the interface adapter.

45. Service object of claim 44, wherein
the adapter request includes information on an access interface at the service object, allowing the adapter manager to access the service object to determine offer-interfaces available at the service object.

46. Service object one of the claims 44 and 45, wherein the service object transmission module is arranged to transmit an address of the interface adapter to the user object for enabling the user object to access the service object.

47. Service object of one of the claims 44 - 46, including
a service object determining module for determining whether a part of the request-interface is available at the service object and serving the user object based on the part of the available request-interface; and
wherein the request generating module is arranged to generate the adapter request based on the remaining part of the request-interface.

48. Service object of one of the claims 44 - 47, wherein the service object includes a link to a legacy object, the legacy object being an object not arranged to generate an adapter request for an unavailable interface.

49. Service object of claim 48, including
a wrapper object factory for generating the service object; and
a legacy object factory for generating the legacy object.

## Patentansprüche

1. Verfahren zur dynamischen Schnittstellenerzeugung an einem Adapter-Manager, welches die Schritte umfaßt:
- Empfang (306) einer Adapter-Anforderung von einem Diensteobjekt, welche Informationen an mindestens einer Angebotsschnittstelle enthält, die vom Diensteobjekt angeboten wird, und einer Anforderungsschnittstelle, die von einem Benutzerobjekt angefordert wurde, wobei das Benutzerobjekt eine Funktionalität anfordert, die vom Dienst zur Verfügung gestellt wird,
- Erhalten eines Schnittstellenadapters (307) von der Anforderungsschnittstelle zu mindestens einer von mindestens einer Angebotsschnittstelle, die vom Diensteobjekt angeboten wird, und
- Übertragung (308) zumindest von Informationen über den Schnittstellenadapter zum Diensteobjekt, damit das Benutzerobjekt auf das Diensteobjekt zugreifen kann.

2. Verfahren nach Anspruch 1, bei dem der Schnittstellenadapter aus einer Bibliothek von Schnittstellenadaptern ausgewählt wird, die am Adapter-Manager verfügbar ist.

3. Verfahren nach einem der vorhergehenden Ansprüche, welches den Schritt der Auswahl eines Schnittstellenadapters aus einer Liste angebotener Schnittstellen, die mindestens eine angebotene Schnittstelle enthält, und aus einer Liste erforderlicher Schnittstellen umfaßt, die mindestens eine erforderliche Schnittstelle enthält.

4. Verfahren nach einem der vorhergehenden Ansprüche, welches, wenn mehr als ein Schnittstellenadapter verfügbar ist, den Schritt der Auswahl eines Schnittstellenadapters auf der Grundlage eines Klassifikators umfaßt, welcher in Verbindung mit den Schnittstellenadaptern gespeichert ist.

5. Verfahren nach einem der vorhergehenden Ansprüche, welches, wenn ein Schnittstellenadapter nicht verfügbar ist, die Erzeugung eines Kombinationsadapters umfaßt, der auf mehreren Schnittstellenadaptern beruht.

6. Verfahren nach Anspruch 5, bei dem der Kombinationsadapter einen ersten Schnittstellenadapter, der die Anforderungsschnittstelle mit mindestens einer Zwischenschnittstelle verbindet, und einen zweiten Schnittstellenadapter enthält, der die mindestens eine Zwischenschnittstelle mit mindestens einer Angebotsschnittstelle verbindet.

7. Verfahren nach einem der Ansprüche 5 und 6, bei dem der Kombinationsadapter einen dritten Schnittstellenadapter, der einen ersten Teil der Anforderungsschnittstelle mit der mindestens einen Angebotsschnittstelle verbindet, und einen vierten Schnittstellenadapter enthält, der einen zweiten Teil der Anforderungsschnittstelle mit der mindestens einen Angebotsschnittstelle verbindet.

8. Verfahren nach einem der vorhergehenden Ansprüche, das den Schritt der Hinzufügung des Kombinationsadapters zur Bibliothek der Schnittstellenadapter umfaßt.

9. Verfahren nach einem der vorhergehenden Ansprüche, welches den Schritt der Speicherung eines Klassifikators in Verbindung mit dem Kombinationsadapter umfaßt, wobei der Klassifikator anzeigt, dass der Kombinationsadapter ein Kombinationsadapter ist, und ein Kombinationsadapter aus der Bibliothek der Schnittstellenadapter nur dann ausgewählt wird, wenn ein entsprechender Schnittstellenadapter mit mindestens einer Angebotsschnittstelle und einer Anforderungsschnittstelle nicht vorhanden ist.

10. Verfahren nach einem der vorhergehenden Ansprüche, bei dem die Adapter-Anforderung Informationen über eine Zugriffsschnittstelle am Diensteobjekt umfaßt, welche es dem Adapter-Manager ermöglicht, auf das Diensteobjekt zuzugreifen, um festzustellen, ob am Diensteobjekt Angebotsschnittstellen verfügbar sind.

11. Verfahren nach einem der vorhergehenden Ansprüche, bei dem die Adapter-Anforderung Informationen über Daten umfaßt, welche am Diensteobjekt verfügbar sind, und ein indirekter Schnittstellenadapter ausgewählt wird, und der indirekte Adapter es dem Benutzerobjekt ermöglicht, auf die Daten am Diensteobjekt über mindestens eine Schnittstelle zuzugreifen, die am Diensteobjekt verfügbar ist.

12. Verfahren nach einem der vorhergehenden Ansprüche, welches die Schritte umfaßt:
- Bestimmung, ob ein Teil der Anforderungsschnittstelle am Diensteobjekt verfügbar ist, und
- Bedienung des Benutzerobjekts auf der Grundlage des Teils der verfügbaren Anforderungsschnittstelle und
- Erzeugung der Adapter-Anforderung auf der Grundlage des verbleibenden Teils der Anforderungsschnittstelle.

13. Verfahren nach einem der vorhergehenden Ansprüche, bei dem das Diensteobjekt eine Verbindung zu einem hinterlassenen Objekt (legacy object) umfaßt, welches ein Objekt ist, das nicht dafür ausgebildet ist, eine Adapter-Anforderung für eine Schnittstelle zu erzeugen.

14. Verfahren nach Anspruch 13, bei dem
- das Diensteobjekt von einem Umhüllungsobjekt-Generator geliefert wird und
- das hinterlassene Objekt von einem Generator des hinterlassenen Objekts geliefert wird.

15. Verfahren zur dynamischen Schnittstellenerzeugung für ein Diensteobjekt, welches die Schritte umfaßt:
- Empfang (303) einer Benutzeranforderung für eine Anforderungsschnittstelle von einem Benutzerobjekt am Diensteobjekt, wobei das Benutzerobjekt eine Funktionalität anfordert, die vom Dienst zur Verfügung gestellt wird,
- Erzeugung (304) einer Adapter-Anforderung zur Übertragung zu einem Adapter-Manager, wobei die Adapter-Anforderung zumindest Informationen über Angebotsschnittstellen enthält, die vom Diensteobjekt angeboten werden, und über die Anforderungsschnittstelle,
- Übertragung (305) der Adapter-Anforderung an den Adapter-Manager, um diesen zu instruieren, einen Schnittstelle adapter von der Anforderungsschnittstelle an mindestens einer der Angebotsschnittstellen am Diensteobjekt zu erhalten, und
- Empfang (309) zumindest von Informationen am Schnittstellenadapter und Ermöglichung eines Zugriffs vom Benutzerobjekt auf der Grundlage des Schnittstellenadapters.

16. Verfahren nach Anspruch 15, bei dem das Diensteobjekt eine Adresse des Schnittstellenadapters an das Benutzerobjekt überträgt, damit das Benutzerobjekt auf das Diensteobjekt zugreifen kann.

17. Verfahren nach einem der Ansprüche 15 und 16, welches die Schritte umfaßt:
- Feststellung, ob ein Teil der Anforderungsschnittstelle am Diensteobjekt verfügbar ist, und Bedienung des Benutzerobjekts auf der Grundlage des Teils der verfügbaren Anforderungsschnittstelle, und
- Erzeugung der Adapter-Anforderung auf der Grundlage des verbleibenden Teils der Anforderungsschnittstelle.

18. Verfahren nach einem der Ansprüche 15 bis 17, bei dem das Diensteobjekt eine Verbindung zu einem hinterlassenen Objekt enthält, wobei das hinterlassene Objekt ein Objekt ist, das nicht dazu ausgeführt ist, eine Adapter-Anforderung für eine nicht verfügbare Schnittstelle zu erzeugen.

19. Verfahren nach Anspruch 18, bei dem
- das Diensteobjekt von einem Umhüllungsobjekt-Generator geliefert wird und
- das hinterlassene Objekt von einem Generator des hinterlassenen Objekts geliefert wird.

20. Verfahren nach einem der Ansprüche 15 bis 19, bei dem der Schnittstellenadapter aus einer Bibliothek von Schnittstellenadaptern ausgewählt ist, die am Adapter-Manager verfügbar ist.

21. Verfahren nach einem der Ansprüche 15 bis 20, welches den Schritt der Auswahl eines Schnittstellenadapters auf der Grundlage einer Liste angebotener Schnittstellen, die mindestens eine angebotene Schnittstelle enthält, und einer Liste erforderlicher Schnittstellen umfaßt, die mindestens eine erforderliche Schnittstelle enthält.

22. Verfahren nach einem der Ansprüche 15 bis 21, welches, wenn mehr als ein Schnittstellenadapter verfügbar ist, den Schritt der Auswahl eines Schnittstellenadapters auf der Grundlage eines Klassifikators umfaßt, welcher in Verbindung mit den Schnittstellenadaptern gespeichert ist.

23. Verfahren nach einem der Ansprüche 15 bis 22, welches, wenn ein Schnittstellenadapter nicht verfügbar ist, den Schritt der Erzeugung eines Kombinationsadapters auf der Grundlage mehrerer Schnittstellenadapter umfaßt.

24. Verfahren nach Anspruch 23, bei dem der Kombinationsadapter einen ersten Schnittstellenadapter, der die Anforderungsschnittstelle mit mindestens einer Zwischenschnittstelle verbindet, und einen zweiten Schnittstellenadapter enthält, der die mindestens eine Zwischenschnittstelle mit der mindestens einen Angebotsschnittstelle verbindet.

25. Verfahren nach einem der Ansprüche 23 und 24, bei dem der Kombinationsadapter einen dritten Schnittstellenadapter, der einen ersten Teil der Anforderungsschnittstelle mit der mindestens einen Angebotsschnittstelle verbindet, und einen vierten Schnittstellenadapter enthält, der einen zweiten Teil der Anforderungsschnittstelle mit der mindestens einen Angebotsschnittstelle verbindet.

26. Verfahren nach einem der Ansprüche 15 bis 25, welches den Schritt der Hinzufügung des Kombinationsadapters zur Bibliothek der Schnittstellenadapter umfaßt.

27. Verfahren nach einem der Ansprüche 15 bis 26, welches den Schritt der Speicherung eines Klassifikators in Verbindung mit dem Kombinationsadapter umfaßt, wobei der Klassifikator anzeigt, dass es sich bei dem Kombinationsadapter um einen solchen handelt, und ein Kombinationsadapter aus der Bibliothek der Schnittstellenadapter nur dann ausgewählt wird, wenn ein entsprechender Schnittstellenadapter mit mindestens einer Angebotsschnittstelle und einer Anforderungsschnittstelle nicht vorhanden ist.

28. Verfahren nach einem der Ansprüche 15 bis 27, bei dem die Adapter-Anforderung Informationen über eine Zugriffsschnittstelle am Diensteobjekt enthält, die es dem Adapter-Manager ermöglicht, auf das Diensteobjekt zuzugreifen, um Angebotsschnittstellen zu bestimmen, die am Diensteobjekt verfügbar sind.

29. Verfahren nach einem der Ansprüche 15 bis 28, bei dem die Adapter-Anforderung Informationen über Daten enthält, die am Diensteobjekt verfügbar sind, und ein indirekter Schnittstellenadapter ausgewählt wird, der es dem Benutzerobjekt ermöglicht, auf die Daten am Diensteobjekt über mindestens eine am Diensteobjekt verfügbare Schnittstelle zuzugreifen.

30. Programm mit Instruktionen, das so angepaßt ist, dass es das Verfahren nach einem der vorhergehenden Ansprüche ausführt.

31. Computerlesbares Medium, in dem ein derartiges Programm enthalten ist, daß ein Computer das Verfahren nach einem der Ansprüche 1 bis 29 ausführt.

32. Computerprogrammprodukt, welches das computerlesbare Medium nach Anspruch 31 enthält.

33. Adapter-Manager zur dynamischen Schnittstellenerzeugung, der umfaßt:
- ein Adapter-Manager-Empfangsmodul zum Empfang einer Adapter-Anforderung von einem Diensteobjekt, das zumindest Informationen über mindestens eine Angebotsschnittstelle, die vom Diensteobjekt angeboten wird, und über eine Anforderungsschnittstelle enthält, die von einem Benutzerobjekt angefordert wurde, wobei das Benutzerobjekt eine vom Dienst zur Verfügung gestellte Funktionalität anfordert,
- ein Adapter-Manager-Bestimmungsmodul zum Erhalten eines Schnittstellenadapters von der Anforderungsschnittstelle zu mindestens einer Angebotsschnittstelle der mindestens einen, vom Diensteobjekt angebotenen Angebotsschnittstelle,
- ein Adapter-Manager-Übertragungsmodul zur Übertragung zumindest von Informationen über den Schnittstellenadapter zum Diensteobjekt, damit das Benutzerobjekt auf das Diensteobjekt zugreifen kann.

34. Adapter-Manager nach Anspruch 33, bei dem das Adapter-Manager-Bestimmungsmodul so ausgeführt ist, dass es den Schnittstellenadapter von einer Bibliothek von Schnittstellenadaptern erhält, die am Adapter-Manager verfügbar ist.

35. Adapter-Manager nach einem der Ansprüche 33 und 34, bei dem das Adapter-Manager-Bestimmungsmodul so ausgeführt ist, dass es einen Schnittstellenadapter auf der Grundlage einer Liste angebotener Schnittstellen erhält, welche mindestens eine angebotene Schnittstelle und eine Liste erforderlicher Schnittstellen enthält, die mindestens eine erforderliche Schnittstelle enthält.

36. Adapter-Manager nach einem der Ansprüche 33 bis 35, bei dem das Adapter-Manager-Bestimmungsmodul so ausgeführt ist, dass es, wenn mehr als ein Schnittstellenadapter verfügbar ist, einen Schnittstellenadapter auf der Grundlage eines in Verbindung mit den Schnittstellenadaptern gespeicherten Klassifikators auswählt.

37. Adapter-Manager nach einem der Ansprüche 32 bis 36, bei dem das Adapter-Manager-Bestimmungsmodul so ausgeführt ist, dass es, wenn ein Schnittstellenadapter nicht verfügbar ist, auf der Grundlage mehrerer Schnittstellenadapter einen Kombinationsadapter erzeugt.

38. Adapter-Manager nach Anspruch 37, bei dem der Kombinationsadapter einen ersten Schnittstellenadapter enthält, der die Anforderungsschnittstelle mit mindestens einer Zwischenschnittstelle verbindet, und einen zweiten Schnittstellenadapter enthält, der die mindestens eine Zwischenschnittstelle mit der mindestens einen Angebotsschnittstelle verbindet.

39. Adapter-Manager nach einem der Ansprüche 37 und 38, bei dem der Kombinationsadapter einen dritten Schnittstellenadapter, der einen ersten Teil der Anforderungsschnittstelle mit der mindestens einen Angebotsschnittstelle verbindet, und einen vierten Schnittstellenadapter enthält, der einen zweiten Teil der Anforderungsschnittstelle mit der mindestens einen Angebotsschnittstelle verbindet.

40. Adapter-Manager nach einem der Ansprüche 33 bis 39, bei dem das Bestimmungsmodul so ausgeführt ist, dass es den Kombinationsadapter in die Bibliothek der Schnittstellenadapter einfügt.

41. Adapter-Manager nach einem der Ansprüche 33 bis 40, welcher so ausgeführt ist, dass ein Klassifikator in Verbindung mit dem Kombinationsadapter gespeichert wird, wobei der Klassifikator anzeigt, dass der Kombinationsadapter ein Kombinationsadapter ist, und ein Kombinationsadapter aus der Bibliothek der Schnittstellenadapter nur dann ausgewählt wird, wenn ein entsprechender Schnittstellenadapter mit mindestens einer Angebotsschnittstelle und einer Anforderungsschnittstelle nicht vorhanden ist.

42. Verfahren nach einem der Ansprüche 33 bis 41, bei dem die Adapter-Anforderung Informationen über eine Zugriffsschnittstelle am Diensteobjekt enthält, die es dem Adapter-Manager ermöglicht, auf das Diensteobjekt zuzugreifen, um Angebotsschnittstellen zu bestimmen, die am Diensteobjekt verfügbar sind.

43. Adapter-Manager nach einem der Ansprüche 33 bis 42, bei dem die Adapter-Anforderung Informationen über Daten enthält, die am Diensteobjekt verfügbar sind, und das Adapter-Manager-Bestimmungsmodul so ausgeführt ist, dass es einen indirekten Schnittstellenadapter auswählt, welcher es dem Benutzerobjekt ermöglicht, auf die Daten am Diensteobjekt über mindestens eine Schnittstelle zuzugreifen, die am Diensteobjekt verfügbar ist.

44. Diensteobjekt zur dynamischen Schnittstellenerzeugung, welches umfaßt:
- ein Diensteobjekt-Empfangsmodul zum Empfang einer Benutzeranforderung für eine Anforderungsschnittstelle von einem Benutzerobjekt, wobei das Benutzerobjekt eine Funktionalität benötigt, die vom Dienst zur Verfügung gestellt wird,
- ein Anforderungs-Erzeugungsmodul zur Erzeugung einer Adapter-Anforderung zur Übertragung zu einem Adapter-Manager, wobei die Adapter-Anforderung zumindest Informationen über Angebotsschnittstellen umfaßt, die vom Diensteobjekt angeboten werden, und über die Anforderungsschnittstelle,
- Diensteobjekt-Übertragungsmodul zur Übertragung der Adapter-Anforderung zum Adapter-Manager, um den Adapter-Manager zu instruieren, von der Anforderungsschnittstelle einen Schnittstellenadapter für mindestens eine der Angebotsschnittstellen am Diensteobjekt zu erhalten, und
wobei das Diensteobjekt-Empfangsmodul so ausgeführt ist, dass es zumindest Informationen über den Schnittstellenadapter empfängt, um einen Zugriff vom Benutzerobjekt auf der Grundlage des Schnittstellenadapters zu ermöglichen.

45. Diensteobjekt nach Anspruch 44, bei dem die Adapter-Anforderung Informationen über eine Zugriffsschnittstelle am Diensteobjekt enthält, die es dem Adapter-Manager ermöglicht, auf das Diensteobjekt zuzugreifen, um Angebotsschnittstellen zu bestimmen, die am Diensteobjekt verfügbar sind.

46. Diensteobjekt nach einem der Ansprüche 44 und 45, bei dem das Diensteobjekt-Übertragungsmodul so ausgeführt ist, dass es eine Adresse des Schnittstellenadapters zum Benutzerobjekt überträgt, um das Benutzerobjekt zu befähigen, auf das Diensteobjekt zuzugreifen.

47. Diensteobjekt nach einem der Ansprüche 44 bis 46, welches umfaßt:
- ein Diensteobjekt-Bestimmungsmodul zur Bestimmung, ob ein Teil der Anforderungsschnittstelle am Diensteobjekt verfügbar ist, und Bedienung des Benutzerobjekts auf der Grundlage des Teils der verfügbaren Anforderungsschnittstelle,
wobei das Anforderungs-Erzeugungsmodul so ausgeführt ist, dass es die Adapter-Anforderung auf der Grundlage des verbleibenden Teils der Anforderungsschnittstelle erzeugt.

48. Diensteobjekt nach einem der Ansprüche 44 bis 47, bei dem das Diensteobjekt eine Verbindung mit einem hinterlassenen Objekt enthält, welches ein Objekt ist, das nicht so ausgeführt ist, dass es eine Adapter-Anforderung für eine nicht verfügbare Schnittstelle erzeugt.

49. Diensteobjekt nach Anspruch 48, welches
- einen Umhüllungsobjekt-Generator zur Erzeugung des Diensteobjekts und
- einen Generator des hinterlassenen Objekts zur Erzeugung des hinterlassenen Objektes enthält.

## Revendications

1. Procédé de génération d'interface dynamique au niveau d'un gestionnaire d'adaptateur, comprenant
la réception (306) à partir d'un objet service d'une demande d'adaptateur comprenant au moins des informations sur au moins une interface d'offre offerte par l'objet service, et une interface de demande demandée par un objet utilisateur, l'objet utilisateur requérant une fonctionnalité procurée par le service,
l'obtention d'un adaptateur d'interface (307) à partir de l'interface de demande pour au moins une des au moins unes interfaces d'offre offertes par l'objet service, et
la transmission (308) d'au moins des informations sur l'adaptateur d'interface pour l'objet service destinées à permettre à l'objet utilisateur d'accéder à l'objet service.

2. Procédé selon la revendication 1, dans lequel l'adaptateur d'interface est sélectionné à partir d'une bibliothèque d'adaptateurs d'interface disponibles au niveau du gestionnaire d'adaptateur.

3. Procédé selon l'une des revendications précédentes, comprenant la sélection d'un adaptateur d'interface sur la base d'une liste d'interfaces offertes, comprenant au moins une interface offerte, et une liste d'interfaces nécessaires, comprenant au moins une interface nécessaire.

4. Procédé selon l'une des revendications précédentes, comprenant, si plus d'un adaptateur d'interface est disponible, la sélection d'un adaptateur d'interface sur la base d'un module de classement mémorisé en relation avec les adaptateurs d'interface.

5. Procédé selon l'une des revendications précédentes, comprenant, si un adaptateur d'interface n'est pas disponible, la génération d'un adaptateur composite sur la base d'une pluralité d'adaptateurs d'interface.

6. Procédé selon la revendication 5, dans lequel l'adaptateur composite comprend un premier adaptateur d'interface reliant l'interface de demande à au moins une interface intermédiaire et un second adaptateur d'interface reliant la au moins une interface intermédiaire à la au moins une interface d'offre.

7. Procédé selon l'une des revendications 5 et 6, dans lequel l'adaptateur composite comprend un troisième adaptateur d'interface reliant une première partie de l'interface de demande à la au moins une interface d'offre, et un quatrième adaptateur d'interface reliant une seconde partie de l'interface de demande à la au moins une interface d'offre.

8. Procédé selon l'une des revendications précédentes, comprenant l'ajout de l'adaptateur composite à la bibliothèque des adaptateurs d'interface.

9. Procédé selon l'une des revendications précédentes, comprenant la mémorisation d'un module de classement en association avec l'adaptateur composite, le module de classement indiquant que l'adaptateur composite est un adaptateur composite et dans lequel un adaptateur composite est sélectionné à partir de la bibliothèque d'adaptateurs d'interface seulement si un adaptateur d'interface correspondant avec au moins une interface d'offre et une interface de demande correspondantes n'existe pas.

10. Procédé selon l'une des revendications précédentes, dans lequel
la demande d'adaptateur comprend des informations sur une interface d'accès à l'objet service, permettant au gestionnaire d'adaptateur d'accéder à l'objet service pour déterminer des interfaces d'offre disponibles au niveau de l'objet service.

11. Procédé selon l'une des revendications précédentes, dans lequel
la demande d'adaptateur comprend les informations sur des données disponibles au niveau de l'objet service, et
un adaptateur d'interface indirect est sélectionné, l'adaptateur indirect permettant à l'objet utilisateur d'accéder aux données au niveau de l'objet service par l'intermédiaire d'au moins une interface disponible au niveau de l'objet service.

12. Procédé selon l'une des revendications précédentes, comprenant
la détermination du fait qu'une partie de l'interface de demande est disponible ou non au niveau de l'objet service et le fait de servir l'objet utilisateur sur la base de la partie de l'interface de demande disponible, et
la génération de la demande d'adaptateur sur la base de la partie restante de l'interface de demande.

13. Procédé selon l'une des revendications précédentes, dans lequel l'objet service comprend une liaison vers un objet à héritage, l'objet à héritage étant un objet qui n'est pas conçu pour générer une demande d'adaptateur pour une interface.

14. Procédé selon la revendication 13, dans lequel
l'objet service est procuré par une classe d'objet enveloppante, et
l'objet à héritage est procuré par une classe d'objet à héritage.

15. Procédé de génération d'interface dynamique pour un objet service, comprenant
la réception (303), au niveau de l'objet service à partir d'un objet utilisateur, d'une demande d'utilisateur pour une interface de demande, l'objet utilisateur nécessitant une fonctionnalité procurée par le service,
la génération (304) d'une demande d'adaptateur en vue d'une transmission à un gestionnaire d'adaptateur, la demande d'adaptateur comprenant au moins des informations sur les interfaces d'offre, offertes par l'objet service, et l'interface de demande,
la transmission (305) de la demande d'adaptateur au gestionnaire d'adaptateur afin d'ordonner au gestionnaire d'adaptateur d'obtenir un adaptateur d'interface à partir de l'interface de demande pour au moins une des interfaces d'offre au niveau de l'objet service, et
la réception (309) d'au moins des informations sur l'adaptateur d'interface et l'autorisation d'un accès à partir de l'objet utilisateur sur la base de l'adaptateur d'interface.

16. Procédé selon la revendication 15, dans lequel l'objet service transmet une adresse de l'adaptateur d'interface à l'objet utilisateur afin de permettre à l'objet utilisateur d'accéder à l'objet service.

17. Procédé selon l'une des revendications 15 et 16, comprenant
la détermination du fait qu'une partie de l'interface de demande est ou non disponible au niveau de l'objet service et le fait de servir l'objet utilisateur sur la base d'une partie de l'interface de demande disponible, et
la génération de demande d'adaptateur sur la base de la partie restante de l'interface de demande.

18. Procédé selon l'une des revendications 15 à 17, dans lequel l'objet service comprend un lien vers un objet à héritage, l'objet à héritage étant un objet qui n'est pas conçu pour générer une demande d'adaptateur pour une interface non disponible.

19. Procédé selon la revendication 18, dans lequel
l'objet service est fourni par une classe d'objet enveloppante, et
l'objet à héritage est procuré par une classe d'objet à héritage.

20. Procédé selon l'une des revendications 15 à 19, dans lequel l'adaptateur d'interface est sélectionné à partir d'une bibliothèque d'adaptateurs d'interface disponibles au niveau du gestionnaire d'adaptateur.

21. Procédé selon l'une des revendications 15 à 20, comprenant la sélection d'un adaptateur d'interface sur la base d'une liste d'interfaces offertes, comprenant au moins une interface offerte, et une liste d'interfaces nécessaires, comprenant au moins une interface nécessaire.

22. Procédé selon l'une des revendications 15 à 21, comprenant, si plus d'un adaptateur d'interface est disponible, la sélection d'un adaptateur d'interface sur la base d'un module de classement mémorisé en relation avec les adaptateurs d'interface.

23. Procédé selon l'une des revendications 15 à 22, comprenant, si un adaptateur d'interface n'est pas disponible, la génération d'un adaptateur composite sur la base d'une pluralité d'adaptateurs d'interface.

24. Procédé selon la revendication 23, dans lequel l'adaptateur composite comprend un premier adaptateur d'interface reliant l'interface de demande à au moins une interface intermédiaire et un second adaptateur d'interface reliant la au moins une interface intermédiaire à la au moins une interface d'offre.

25. Procédé selon l'une des revendications 23 et 24, dans lequel l'adaptateur composite comprend un troisième adaptateur d'interface reliant une première partie de l'interface de demande à la au moins une interface d'offre, et un quatrième adaptateur d'interface reliant une seconde partie de l'interface de demande à la au moins une interface d'offre.

26. Procédé selon l'une des revendications 15 à 25, comprenant l'ajout de l'adaptateur composite à la bibliothèque d'adaptateurs d'interface.

27. Procédé selon l'une des revendications 15 à 26, comprenant la mémorisation d'un module de classement en relation avec l'adaptateur composite, le module de classement indiquant que l'adaptateur composite est un adaptateur composite et où l'adaptateur composite est sélectionné à partir de la bibliothèque d'adaptateurs d'interface seulement si un adaptateur d'interface correspondant avec au moins une interface d'offre et une interface de demande correspondantes n'existe pas.

28. Procédé selon l'une des revendications 15 à 27, dans lequel
la demande d'adaptateur comprend les informations suivant une interface d'accès à l'objet service, permettant au gestionnaire d'adaptateur d'accéder à l'objet service afin de déterminer les interfaces d'offre disponibles au niveau de l'objet service.

29. Procédé selon selon l'une des revendications 15 à 28 dans lequel
la demande d'adaptateur comprend des informations sur les données disponibles au niveau de l'objet service, et
un adaptateur d'interface indirect est sélectionné, l'adaptateur d'interface indirect permettant à l'objet utilisateur d'accéder aux données de l'objet service par l'intermédiaire d'au moins une interface disponible au niveau de l'objet service.

30. Programme comportant des instructions conçues pour exécuter le procédé selon l'une des revendications précédentes.

31. Support lisible par un ordinateur, dans lequel un programme est incorporé, où le programme est destiné à amener un ordinateur à exécuter le procédé selon l'une des revendications 1 à 29.

32. Produit de programme informatique comprenant le support lisible par un ordinateur selon la revendication 31.

33. Gestionnaire d'adaptateur pour une génération d'interface dynamique comprenant
un module de réception de gestionnaire d'adaptateur destiné à recevoir d'un objet service une demande d'adaptateur comprenant au moins des informations sur au moins une interface d'offre offerte par l'objet service, et une interface de demande demandée par un objet utilisateur, l'objet utilisateur nécessitant une fonctionnalité fournie par le service,
un module de détermination de gestionnaire d'adaptateur destiné à obtenir un adaptateur d'interface de l'interface de demande pour au moins une de la au moins une des interfaces d'offre offertes par l'objet service,
un module de transmission de gestionnaire d'adaptateur destiné à transmettre au moins des informations sur l'adaptateur d'interface à l'objet service afin de permettre à l'objet utilisateur d'accéder à l'objet service.

34. Gestionnaire d'adaptateur selon la revendication 33, dans lequel le module de détermination de gestionnaire d'adaptateur est conçu pour obtenir l'adaptateur d'interface à partir d'une bibliothèque d'adaptateurs d'interface disponibles au niveau du gestionnaire d'adaptateur.

35. Gestionnaire d'adaptateur selon l'une des revendications 33 et 34, dans lequel le module de détermination de gestionnaire d'adaptateur est conçu pour obtenir un adaptateur d'interface sur la base d'une liste d'interfaces offertes, comprenant au moins une interface offerte et une liste d'interfaces nécessaires comprenant au moins une interface nécessaire.

36. Gestionnaire d'adaptateur selon l'une des revendications 33 à 35, dans lequel le module de détermination de gestionnaire d'adaptateur est conçu, si plus qu'un adaptateur d'interface est disponible, pour sélectionner un adaptateur d'interface sur la base d'un module de classement mémorisé en relation avec les adaptateurs d'interface.

37. Gestionnaire d'adaptateur selon l'une des revendications 32 à 36, dans lequel le module de détermination, si un adaptateur d'interface n'est pas disponible, est conçu pour générer un adaptateur composite sur la base d'une pluralité d'adaptateurs d'interface.

38. Gestionnaire d'adaptateur selon la revendication 37, dans lequel l'adaptateur composite comprend un premier adaptateur d'interface reliant l'interface de demande à au moins une interface intermédiaire et un second adaptateur d'interface reliant au moins une interface intermédiaire à la au moins une interface d'offre.

39. Gestionnaire d'adaptateur selon l'une des revendications 37 et 38, dans lequel l'adaptateur composite comprend un troisième adaptateur d'interface reliant une première partie de l'interface de demande à la au moins une interface d'offre, et un quatrième adaptateur d'interface reliant une seconde partie de l'interface de demande à la au moins une interface d'offre.

40. Gestionnaire d'adaptateur selon l'une des revendications 33 à 39, dans lequel le module de détermination est conçu pour ajouter l'adaptateur composite à la bibliothèque d'adaptateurs d'interface.

41. Gestionnaire d'adaptateur selon l'une des revendications 33 à 40 conçu pour mémoriser un module de classement en relation avec l'adaptateur composite, le module de classement indiquant que l'adaptateur composite est un adaptateur composite et où un adaptateur composite est sélectionné à partir de la bibliothèque d'adaptateurs d'interface seulement si un adaptateur d'interface correspondant à au moins une interface d'offre et une interface de demande correspondantes n'existe pas.

42. Procédé selon l'une des revendications 33 à 41, dans lequel
la demande d'adaptateur comprend des informations sur une interface d'accès au niveau de l'objet service, permettant au gestionnaire d'adaptateur d'accéder à l'objet service afin de déterminer des interfaces d'offre disponibles au niveau de l'objet service.

43. Gestionnaire d'adaptateur selon l'une des revendications 33 à 42, dans lequel
la demande d'adaptateur comprend des informations sur des données disponibles au niveau de l'objet service, et
le module de détermination de gestionnaire d'adaptateur est conçu pour sélectionner un adaptateur d'interface indirect, l'adaptateur d'interface indirect permettant à l'objet utilisateur d'accéder aux données au niveau de l'objet service par l'intermédiaire d'au moins une interface disponible au niveau de l'objet service.

44. Objet service pour une génération d'interface dynamique comprenant
un module de réception d'objet service destiné à recevoir d'un objet service une demande d'utilisateur pour une interface de demande, l'objet utilisateur requérant une fonctionnalité procurée par le service,
un module de génération de demande destiné à générer une demande d'adaptateur pour la transmission à un gestionnaire d'adaptateur, la demande d'adaptateur comprenant au moins les informations sur des interfaces d'offre, offertes par l'objet service, et l'interface de demande,
un module de transmission d'objet service destiné à transmettre la demande d'adaptateur au gestionnaire d'adaptateur afin d'ordonner au gestionnaire d'adaptateur d'obtenir un adaptateur d'interface à partir de l'interface de demande pour au moins une des interfaces d'offre au niveau de l'objet service, et
où le module de réception d'objet service est conçu pour recevoir au moins des informations sur l'adaptateur d'interface afin de permettre un accès à partir de l'objet utilisateur sur la base de l'adaptateur d'interface.

45. Objet service selon la revendication 44, dans lequel
la demande d'adaptateur comprend des informations sur une interface d'accès au niveau de l'objet service, permettant au gestionnaire d'adaptateur d'accéder à l'objet service afin de déterminer les interfaces d'offre disponibles au niveau de l'objet service.

46. Objet service selon l'une des revendications 44 et 45, dans lequel le module de transmission d'objet service est conçu pour transmettre une adresse de l'adaptateur d'interface à l'objet utilisateur afin de permettre à l'objet utilisateur d'accéder à l'objet service.

47. Objet service selon l'une des revendications 44 à 46, comprenant
un module de détermination d'objet service destiné à déterminer si une partie de l'interface de demande est disponible au niveau de l'objet service et à servir l'objet service sur la base de la partie de l'interface de demande disponible, et
dans lequel le module de génération de demande est conçu pour générer une demande d'adaptateur sur la base de la partie restante de l'interface de demande.

48. Objet service selon l'une des revendications 44 à 47, dans lequel l'objet service comprend une liaison vers un objet à héritage, l'objet à héritage étant un objet qui n'est pas conçu pour générer une demande d'adaptateur en vue d'une interface non disponible.

49. Objet service selon la revendication 48, comprenant
une classe d'objet enveloppante destinée à générer l'objet service, et
une classe d'objet à héritage destinée à générer l'objet à héritage.
